# EUROPEAN PATENT SPECIFICATION

(11) **EP 2 396 431 B1**
(45) Date of publication and mention of the grant of the patent: **11.09.2013**
(21) Application number: 10741560.6
(22) Date of filing: 27.01.2010
(51) Int. Cl.: C14C 11/00, D06M 13/348, D06M 15/564, C08G 18/78, C08G 18/67, C08G 18/81, C09D 175/16, C08G 18/28, C09D 133/14

(54) **LEATHER ARTICLE HAVING IMPROVED SOIL RESISTANCE AND METHOD OF MAKING SAME**
LEDERARTIKEL MIT VERBESSERTER VERSCHMUTZUNGSBESTÄNDIGKEIT UND HERSTELLUNGSVERFAHREN DAFÜR
ARTICLE EN CUIR PRÉSENTANT UNE RÉSISTANCE AMÉLIORÉE AUX SALISSURES ET PROCÉDÉ DE FABRICATION DE CELUI-CI

(30) Priority: 12.02.2009 GB 0902321
(43) Date of publication of application: 21.12.2011
(73) Proprietor: 3M Innovative Properties Company, Saint Paul, MN 55133-3427 (US)
(72) Inventor: AUDENAERT, Frans, A., B-1831 Diegem (BE)
(74) Representative: Gabriel, Kiroubagaranne
(86) International application number: PCT/US2010/022231
(87) International publication number: WO 2010/093520

(56) References cited:
- EP-A1- 1 820 809
- JP-A- 2000 054 000
- KR-A- 20070 110 097
- US-A- 4 382 798
- US-A1- 2002 033 468
- US-A1- 2008 008 888
- DATABASE WPI Week 198910 Thomson Scientific, London, GB; AN 1989-075480 XP002677555, & SU 1 420 022 A (EREV LEATHER PRODN) 30 August 1988 (1988-08-30)

## Description

### BACKGROUND

The present invention relates to leather articles that have one or more primer layers and a top layer. In particular, the present invention relates to top layers that have improved resistance to soiling and / or that can more easily be cleaned. The invention further relates to a method of making leather articles.

The use of leather articles in car interiors and in furniture has increased significantly in recent years. Especially light coloured, beige or white leather car interior or furniture has found increased importance through its attractive appearance. It is common practice to provide the leather surface with a protective coating. Protective coatings typically comprise several coating layers, including at least one base coat or primer layer, optionally a middle coat and one or more topcoats. The topcoat protects the outer surface of the leather and provides the leather with a desired appearance.

Coated leathers are disclosed in for example EP 1123981 and EP 1577400. EP 1123981 discloses leather coated with a cured fluorine-containing resin coating composition. The cured coating composition is obtainable by curing a curable fluorine-containing resin coating composition comprising a fluorine-containing resin having a reactive curable group and a curing agent. EP 1577400 relates to a paint composition for leather comprising a fluorine-containing resin and a silicone oil, and a paint composition for leather comprising a curable fluorine-containing resin, a curing agent and a silicone oil.

### SUMMARY

Despite developments made in protective top coats for coated leathers, these leathers suffer from dry soils, aqueous or oily soils to attach to the coating and or their removal may be difficult. As a consequence, one major drawback, in particular of light coloured leather substrates is their tendency for soiling and difficulty in cleaning.

Thus, leather articles and in particular leather articles used in car interiors or in furniture are generally vulnerable to soiling. Leather seats, for example, can become soiled through dry soil, and for example through colour transfer from garments or through liquid stains, such as stains made through the dyes that are present in food and beverages. Additionally also marks from cosmetics or pens can occur. Furthermore, abrasion from everyday wear can irreversibly damage the top layer of the coated leather and thus reduce the properties provided thereby.

It would thus be desirable to find a method and a composition for making leather articles dirt and soil repellent and/or make them more easy to clean. Desirably the leather articles would have high abrasion resistance. It would further be desirable to find a method to make a leather article that can be applied in an easy, convenient and cost effective way. Desirably, the method has environmentally beneficial properties. It would furthermore be desirable to find a method that provides good adhesion between the treatment composition and the primer layer of the coated leather, independent of the resin used in the primer layer. Desirably, the method should not alter the appearance substantially and/or touch of the coated leather.

The present invention provides in one aspect a leather article comprising a leather substrate having thereon at least one primer layer and a top layer, said top layer comprising a cross-linked composition obtainable by cross-linking a composition comprising one or more multi-functional monomers having two or more ethylenically unsaturated groups and optionally one or more mono-functional monomers having only one ethylenically unsaturated group and at least one of the multi-functional monomers and/or one of the monofunctional monomers when present, has a fluorinated segment.

Thus, in one embodiment, the cross-linking composition comprises one or more multifunctional monomers, at least one of which has a fluorinated segment and hence is a fluorinated multifunctional monomer. In such embodiment, if a mixture of several multifunctional monomers is used, the mixture may comprise a mixture of fluorinated and non-fluorinated multi-functional monomers.

In another embodiment, the cross-linking composition comprises one or more multi-functional monomers and one or more mono-functional monomers. In such an embodiment at least one monomer in the composition will be a fluorinated monomer, ie contain a fluorinated segment. The fluorinated monomer may thus be mono-functional or multi-functional. Hence in this embodiment, a mixture of non-fluorinated multifunctional monomers and a mono-functional fluorinated monomer can be used.

In a further aspect, the invention provides a method of making a leather article comprising a leather substrate having thereon at least one primer layer and a top layer by applying the cross-linking composition described above to a leather substrate having a primer layer and causing said cross-linking composition to cross-link.

The term monomer as used in the present invention is intended to include simple organic compounds as well as oligomers or macromers that have one or more ethylenically unsaturated groups.

It has been found that leather articles as described above typically have one or more of the following properties: high resistance to soiling, good easy-to clean properties and/or good to excellent abrasion resistance. The cross-linked composition of the top layer generally provides easy wipe-off of attached soil and prevents soil from penetrating into the leather. Stains, even after repeated soiling, can usually be removed without substantial problems, even from light coloured leather substrates.

Furthermore, good adhesion may be observed between the cross-linked composition of the top layer and the resin composition of the primer layer. The compositions used in the method can be readily optimized to spread well on the surface of the primer layer, with the result that typically uniform properties can be achieved over the whole surface of the leather substrate. Generally, the top layer has a low impact on the appearance or the touch of the leather article.

### DETAILED DESCRIPTION

The present invention relates to leather articles comprising a leather substrate having thereon at least one coated layer, further referred to as primer layer. Such leather substrates are commonly known as coated or finished leather, to distinguish from unfinished leather, such as suede or nubuck leather. The material used for coating a surface of the leather is typically a non-fluorine containing composition, typically comprising a resin. For example the primer layer can be formed by applying a coating composition comprising a (meth)acrylic resin, nitrocellulose resin, urethane resin, acrylonitrile resin, butadiene resin, styrene resin, vinyl chloride resin, vinylidene chloride resin, vinyl acetate resin or a mixture of two or more thereof. By forming a primer layer, smoothness and uniformity of appearance can be enhanced. Typical primer resins include (meth)acrylate resins, nitrocellulose resins, urethane resins and combinations thereof.

The top layer of the leather substrate comprises a cross-linked composition obtainable by cross-linking a composition comprising one or more multi-functional monomers having two or more ethylenically unsaturated groups and optionally one or more mono-functional monomers having only one ethylenically unsaturated group and wherein at least one of the monomers has a fluorinated segment.

With the term "ethylenically unsaturated group" is meant a group capable of undergoing a free radical reaction when exposed to radicals generated by decomposition of a suitable initiator under heat and/or radiation, such as actinic radiation or e-beam radiation. Suitable groups include, for example moieties derived from vinyl ethers, vinyl esters, allyl esters, vinyl ketones, styrene, vinyl amide, acrylamides, maleates, fumarates, acrylates and methacrylates. Of these, vinyl, acrylates and methacrylates are preferred.

The fluorinated segment can be selected from the group consisting of a partially fluorinated polyether segment, a perfluorinated polyether segment and a fluorinated aliphatic segment. Monomers having a fluorinated segment may be mono-functional or may be multi-functional, i.e. having two or more ethylenically unsaturated groups. Typically, the fluorinated monomer will have one, two, three, four, five or six ethylenically unsaturated groups.

In one embodiment the monomer having a fluorinated segment comprises a fluorinated polyether segment. The fluorinated polyether segment can be a partially fluorinated polyether segment or a perfluorinated polyether segment. By the term 'perfluorinated polyether segment" is meant a segment having a fluorinated ether group that only consists of carbon and fluorine and that contains at least two ether linkages, whereas a 'partially fluorinated polyether segment' can additionally include one or more hydrogen atoms. Generally, a partially fluorinated polyether segment should not include more than two hydrogen atoms. In a particular embodiment, the fluorinated segment is a perfluorinated polyether segment.

The perfluorinated polyether segment generally comprises repeating units selected from -CₚF₂ₚ-, -CₚF₂ₚO-, -CFZ-, -CFZO-, -CFZCₚF₂ₚO-,-CₚF₂ₚCFZO-, -CF₂CFZO- and mixtures thereof, wherein p is an integer of 1 to 4 and Z is F or a perfluoroalkyl group of 1 to 4 carbon atoms. The perfluorinated polyether segment may be comprised of the same perfluorinated alkylene oxy units or of a mixture of different perfluorinated alkylene oxy units. When the perfluorinated polyether segment is composed of different perfluorinated alkylene oxy units, they can be present in a random configuration, alternating configuration or they can be present as blocks. Typical examples of perfluorinated polyether segments include:
- [CF₂CF₂O]ᵣ-; -[CF(CF₃)CF₂O]ₛ-; -[CF₂CF₂O]ᵢ[CF₂O]ⱼ-; -[CF₂CF₂O]ₗ-[CF(CF₃)CF₂O]ₖ-; - CF₂O(CF₂O)_{q}(C₂F₄O)ₙCF₂-, -(CF₂)₃O(C₄F₈O)ₙ(CF₂)₃-, -CF₂O(C₂F₄O)ₙCF₂- and -CF(CF₃)[OCF₂CF(CF₃)]ₛOCₜF₂ₜO(CF(CF₃)CF₂O)ₙCF(CF₃)-, wherein each r, i, j, I and k are integers of 3 to 25 and wherein each q, n and s have an average value of 0 to 50; the sum (n + s) has an average value of 0 to 50 or 4 to 40; the sum (q + n) is greater than 0; and t is an integer of 2 to 6.

Suitable terminal perfluorinated polyether segments correspond to the general formula: CF₃O(C₂F₄O)ₙCF₂- or C₃F₇O(CF(CF₃)CF₂O)ₙCF(CF₃)- wherein n has a value of 0 to 50.

In another embodiment, the monomer having a fluorinated segment comprises a fluorinated aliphatic segment. The fluorinated aliphatic segment can be monovalent or divalent and can be straight chain, branched chain or cyclic or combinations thereof. The fluorinated aliphatic segment is preferably a perfluorinated aliphatic segment that has at least 3 and up to 18 carbon atoms that can be represented by the formulas -CₙF₂ₙ- and CₙF₂ₙ₊₁. Generally the perfluorinated aliphatic segment has 3 to 10 carbon atoms, in particular 3 or 4 carbon atoms.

In one embodiment the monomer having a fluorinated segment can be represented by the formula I

(R_{f}¹)-[(W)-(E)]_{w} (I)

wherein R_{f}¹ is a fluorinated group; W is a linking group; E is an ethylenically unsaturated group and w is 1 or 2. In a preferred embodiment, E is an acrylate or methacrylate group, a vinyl ether group or -COCF=CH₂.

The fluorinated group R_{f}¹ can be linear, branched, cyclic, or combinations thereof and includes fluorinated polyether segments and perfluorinated aliphatic segments, as described above.

R_{f}¹ can be monovalent or divalent. When R_{f}¹ is monovalent, the fluorinated group is a terminal group. Examples include (CₚF₂ₚ₊₁)-, (CₚF₂ₚ₊₁O)-, (X'CₚF₂ₚO)-, or (X'CₚF₂ₚ₊₁)- where X' is hydrogen, chlorine, or bromine and p is an integer of 1 to 10. Exemplary monovalent R_{f} groups include C₃F₇-, C₄F₉-, CF₃O(C₂F₄O)ₙCF₂-, and C₃F₇O(CF(CF₃)CF₂O)ₙCF(CF₃)-, wherein n has an average value of 0 to 50.

Suitable structures for divalent R_{f}¹ groups include -[CF₂]t-, -[CF₂CF₂O]ᵣ-; - [CF(CF₃)CF₂O]ₛ-; -[CF₂CF₂O]ᵢ[CF₂O]ⱼ- ; -[CF₂CF₂O]ₗ-[CF(CF₃)CF₂O]ₖ-; - CF₂O(CF₂O)_{q}(C₂F₄O)ₙCF₂-,
-(CF₂)₃O(C₄F₈O)ₙ(CF₂)₃-, -CF₂O(C₂F₄O)ₙCF₂-, and
-CF(CF₃)[OCF₂CF(CF₃)]ₛOCₜF₂ₜO(CF(CF₃)CF₂O)ₙCF(CF₃)-, wherein t is an integer from 3 to 18, each r, i,j,l and k are integers of 3 to 25 and wherein each q, n and s have an average value of 0 to 50; the sum (n + s) has an average value of 0 to 50 or 4 to 40; the sum (q + n) is greater than 0; and t is an integer of 2 to 6. As synthesized, compounds according to formula I typically include a mixture of R_{f}¹ groups.

The linking group W in the above formula links the fluorinated group R_{f}¹ to the ethylenically unsaturated group E and is generally a non-fluorinated divalent or trivalent organic linking group. The linking group preferably contain from 1 to 20 carbon atoms and may optionally contain oxygen, nitrogen, or sulfur-containing groups or a combination thereof. The linking group W is preferably free of functional groups that substantially interfere with free-radical reaction (e.g. polymerizable olefinic double bonds, thiols, and other such functionality known to those skilled in the art). Examples of suitable linking groups Q include straight chain, branched chain or cyclic alkylene, arylene, aralkylene, oxy, thio, sulfonyl, sulfoxy, amino, sulfonamido, carboxamido, carbonyloxy, urethanylene, ureylene, and combinations thereof such as sulfonamidoalkylene. Preferred linking groups are selected from the group consisting of alkylene and an organic divalent or trivalent linking group according to the following formulae : 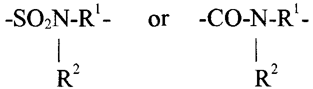 wherein R¹ represents a linear or branched alkylene having 2 to 4 carbon atoms and R² represents a hydrogen, an alkyl having 1 to 4 carbon atoms or R¹

Fluorinated monomers according to formula I having a fluorinated polyether segment are described for example in US 4085137.

Suitable examples include:
CF₃O(CF₂CF₂O)ᵣCH₂OCOCH=CH₂
CF₃O(CF₂CF₂O)ᵣCH₂OCOC(CH₃)=CH₂
CH₂=CH-COOCH₂CF₂O(CF₂O)_{q}(CF₂CF₂)ₙOCF₂CH₂OCOCH=CH₂
CH₂=C(CH₃)-COOCH₂CF₂O(CF₂O)_{q}(CF₂CF₂)ₙOCF₂CH₂OCOC(CH₃)=CH₂
wherein each r is an integer from 3 to 25 and each q and n have an average value of 0 to 50, the sum of q+n being greater than 0.

Fluorinated monomers having a fluorinated polyether segment, according to formula I can also be, obtained from the polymerization of hexafluoropropylene oxide. Suitable examples include:
CH₂=C(R_{d})-COO-CH₂CF(CF₃)-[OCF₂CF(CF₃)]ₛOCF₂CF₂CF₃;
CH₂=C(R_{d})-COO-CH₂CF(CF₃)[OCF₂CF(CF₃)]ₛOCₜF₂ₜO(CF(CF₃)CF₂O)ₙCF(CF₃)-CH₂OCO-C(R_{d})=CH₂;
CH₂=C(R_{d})-COO-CH₂CH₂NRCOCF(CF₃)-[OCF₂CF(CF₃)]ₙOCF₂CF₂CF₃ or
CH₂=C(R_{d})-COO-
CH₂CH₂NRCOCF(CF₃)[OCF₂CF(CF₃)]ₛOCₜF₂ₜO(CF(CF₃)CF₂O)ₙCF(CF₃)-CONRCH₂CH₂OCO-C(R_{d})=CH₂ 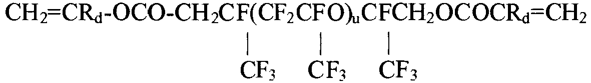 with R= is hydrogen or an alkyl group of for example 1 to 4 carbon atoms;
R_{d} is H or CH_{3;} n and s have an average value of 0 to 50. In one suitable embodiment, n and s each are an integer of 3 to 25 and the corresponding perfluorinated polyether group has a molecular weight of at least 750 g/mol.

Fluorinated monomers according to formula (I) having a perfluorinated aliphatic segment and methods for the preparation thereof are known and disclosed, e.g., in U.S. Pat. No. 2,803,615. Examples of such compounds include general classes of fluorochemical acrylates, methacrylates, vinyl ethers, and allyl compounds containing fluorinated sulfonamido groups, acrylates or methacrylates derived from fluorochemical telomer alcohols, acrylates or methacrylates derived from fluorochemical carboxylic acids, and perfluoroalkyl acrylates or methacrylates as disclosed in EP-A-526 976.

Suitable examples of fluorochemical monomers having a perfluorinated aliphatic segment include:
CF₃(CF₂)₃CH₂OCOCR_{d}=CH₂
CF₃(CF₂)₇(CH₂)₂OCOCR_{d}=CH₂

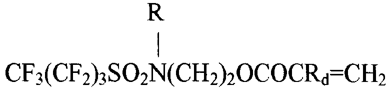

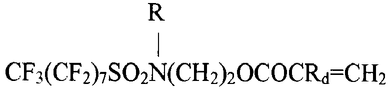

CF₃CF₂(CF₂CF₂)₂₋₈CH₂CH₂OCOCH=CH₂

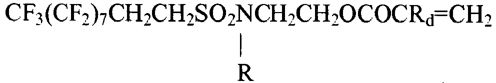

CF₃(CF₂)₃SO₂N[CH₂CH₂OCOCR_{d}=CH₂]₂

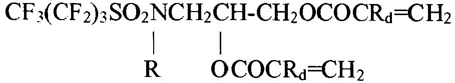

wherein R represents hydrogen or an alkyl group having 1 to 4 carbon atoms and R_{d} represents hydrogen or methyl.

In a yet a further embodiment of the invention, the monomer comprising a fluorinated segment, comprises a mixture of monomers, obtainable according to different methods:

In one embodiment, the mixture of monomers is obtainable by the reaction of a polyisocyanate, a fluorinated compound having an isocyanate reactive group and an organic compound having one or more ethylenically unsaturated groups and an isocyanate reactive group. In an alternative embodiment, the mixture of monomers is obtainable by reacting a fluorinated compound having an isocyanate reactive group with an organic compound having one or more ethylenically unsaturated groups and one or more isocyanate groups.

With the term 'isocyanate reactive group' in connection with the invention is meant a functional group that will react with an isocyanate group under typical reactive conditions for reacting an isocyanate group. Typical reactive conditions include reacting at a temperature of 20 to 150°C, for example 30 to 120°C and typically involve the use of a catalyst. Generally, an isocyanate reactive group includes at least one Zerewittenoff hydrogen. Though not intended to be limiting, examples of isocyanate reactive groups include: alcohols, amines, thiols and carboxylic acids and derivatives thereof. Useful isocyanate reactive groups include for example -OH, -NH- or -NH₂ and -SH, -CO₂R³, where R³ is hydrogen or hydroxyalkyl, -C(O)N(R¹)(R²), where R¹ and R² are independently hydrogen, hydroxyalkyl or polyalkylenepolyamine. Particularly useful isocyanate reactive groups include -OH, -NH- and -NH₂ groups.

The fluorinated compound having an isocyanate reactive group typically has one or more fluorinated segments and one or more hydroxyl or amine groups. The fluorinated segment can be selected from a partially fluorinated polyether segment, a perfluorinated polyether segment and a perfluorinated aliphatic segment. Mixtures of fluorinated compounds having an isocyanate reactive group are contemplated for use as well.

In one particular embodiment, the fluorinated compound having an isocyanate reactive group comprises a hydroxyl group.

In one embodiment, the fluorinated compound comprising a hydroxyl group can be represented by the formula II:

R_{f}-Q-(OH)_{b} (II)

wherein R_{f} represents a fluorinated segment, including a partially fluorinated polyether segment, a perfluorinated polyether segment or a fluorinated aliphatic segment, Q represents a divalent or trivalent generally non-fluorinated organic linking group, b is 1 or 2. Examples of linking groups Q include organic groups that comprise aromatic or aliphatic groups that may be interrupted by O, N or S and that may be substituted, alkylene groups, oxy groups, thio groups, urethane groups, carboxy groups, carbonyl groups, amido groups, oxyalkylene groups, thioalkylene groups, carboxyalkylene and/or amidoalkylene groups.

In one embodiment, the fluorinated segment R_{f} represents a monovalent fluorinated polyether segment according to formula III:

F(R_{fc}O)ₓC_{d}F_{2d}- (III)

wherein each R_{fc} independently represents a partially fluorinated or perfluorinated alkylene group, each x independently represents an integer greater than or equal to 3, and wherein d is an integer from 1 to 6. Preferably R_{fc} represents a perfluoroalkylene group.

The perfluoroalkylene group R_{fc} may be linear or branched and may comprise from 1 to 10 carbon atoms, particularly suitable from 1 to 6 carbon atoms.

Examples of perfluorinated alkyleneoxy groups -R_{fc}O- include:
-CF₂CF₂O-, -CF(CF₃)CF₂O-, -CF₂CF(CF₃)O-, -CF₂CF₂CF₂O-, -CF₂O-, -CF(CF₃)O- and
-CF₂CF₂CF₂CF₂-O-.

A particularly suitable perfluorinated polyether group that corresponds to formula III is F(CF(CF₃)CF₂O)_{g}CF(CF₃)-wherein g is at least 3. Perfluorinated polyether groups of the above formula can conveniently be derived from the polymerization of hexafluoropropyleneoxide (HFPO). In one suitable embodiment, g is an integer of 3 to 25 and the corresponding perfluorinated polyether group has a molecular weight of at least 750 g/mol.

Suitable examples of fluorinated compounds having a hydroxyl group and a fluorinated polyether segment include:
F(CF(CF₃)CF₂O)_{g}CF(CF₃)-CONR^{c}-CH₂CHOHCH₂OH wherein R^{c} is hydrogen or an alkyl group of for example 1 to 4 carbon atoms;
F(CF(CF₃)CF₂O)_{g}CF(CF₃)-CONH-1,4-dihydroxyphenyl;
F(CF(CF₃)CF₂O)_{g}CF(CF₃)-CH₂OCH₂CHOHCH₂OH;
F(CF(CF₃)CF₂O)_{g}CF(CF₃)-COOCH₂CHOHCH₂OH
F(CF(CF₃)CF₂O)_{g}CF(CF₃)-CONR^{d}-(CH₂)ᵥOH
F(CF(CF₃)CF₂O)_{g}CF(CF₃)-CONR^{d}-((CH₂)ᵥ-O)_{w}-H
F(CF(CF₃)CF₂O)_{g}CF(CF₃)-CONHCH₂CH₂CH₂N(CH₂CH₂OH)₂
where R^{d} is hydrogen or an alkyl group such as methyl, ethyl, propyl, butyl, hexyl and v is 2, 3, 4, 6, 8, 10 or 11, w is 1-4; in all examples g is at least 3.

Particularly suitable example includes
F(CF(CF₃)CF₂O)_{g}CF(CF₃)-CONH-CH₂CH₂-OH
where g is at least 3.

In another embodiment, the fluorinated segment R_{f} represents a fluorinated aliphatic segment. The fluorinated aliphatic segment can be straight chain, branched chain or cyclic or combinations thereof. The fluorinated aliphatic segment is preferably a perfluorinated aliphatic segment that has at least 3 and up to 18 carbon atoms, that can be represented by the formula CₙF₂ₙ₊₁. Generally the perfluorinated aliphatic segment has 3 to 10 carbon atoms, in particular 3 or 4 carbon atoms.

Suitable examples of fluorinated compounds having a hydroxyl group and a fluorinated aliphatic segment include:

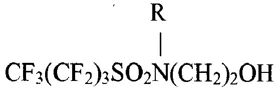

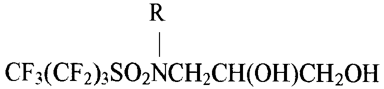

CF₃(CF₂)₃SO₂N[CH₂CH₂OH]₂

CF₃(CF₂)nCH₂CH₂OH

wherein R represents hydrogen or an alkyl group having 1 to 4 carbon atoms and n is 0 to 5.

In a further embodiment, the fluorinated compound comprising a hydroxyl group can be an oligomeric fluorinated alcohol that can be represented by formula IV:

M^{f}ₘM^{h}ₙ -Q¹-(OH)_{c} (IV)

wherein c is 1 or 2, preferably 1, M^{f}ₘM^{h}ₙ represents a fluorinated oligomer comprising m units derived from a fluorinated monomer having a fluorinated segment and n units derived from a non-fluorinated monomer, e.g. a hydrocarbon monomer. -Q¹-(OH)_{c} together represents the organic residue obtained by removing a hydrogen atom from a chain transfer agent that is functionalized with one or two hydroxy groups. The value of m in the oligomeric fluorinated alcohol is between 2 and 40, more suitable between 2 and 20 and particularly suitable between 3 and 15, the value of n is between 0 and 20. Fluorinated oligomers derived from two or more different fluorinated monomers and optional non-fluorinated monomers are also suitable.

In the above formula, Q¹ typically represents an organic residue according to the following formula:
-S-R'- wherein:
R' represents an organic divalent or trivalent linking group that is preferably selected from the group consisting of linear or branched alkylenes (preferably having about 2 to 6 carbon atoms), cyclic alkylenes, arylenes and aralkylenes.

The oligomeric fluorinated alcohol can be prepared by free-radical oligomerization of fluorinated and optionally non-fluorinated monomers in the presence of hydroxy functionalized chain transfer agents. The aliphatic backbone of the oligomeric fluorinated alcohol comprises a sufficient number of polymerized units to render the portion oligomeric, e.g. such that the sum of n and m in the above formula is between 2 and 60, e.g. between 4 and 30.

In a suitable embodiment, the fluorinated monomer is typically an ester of an α,β-ethylenically unsaturated carboxylic acid and contains a fluorinated segment. The fluorinated monomer can be represented by general formula I and is as described above.

Specific examples of fluorinated monomers include:
CH₂=C(R_{d})-COO-CH₂CF(CF₃)-[OCF₂CF(CF₃)]ₙOCF₂CF₂CF₃
and
CH₂=C(R_{d})-COO-CH₂CH₂-NH-CO-CF(CF₃)-[OCF₂CF(CF₃)]ₙOCF₂CF₂CF₃
wherein n is an integer of 3 to 25 and the corresponding perfluorinated polyether group has a molecular weight of at least 750 g/mol.

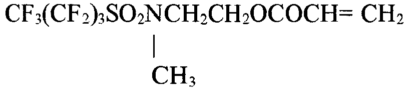

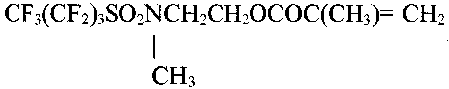

The oligomeric fluorinated alcohol optionally comprises units from non-fluorinated monomers. The non-fluorinated monomer is typically a monomer comprising an ethylenically unsaturated group and a hydrocarbon group. Hydrocarbon group containing monomers are well known and generally commercially available. Useful hydrocarbon containing monomers include those according to formula V:

R^{h}-Q²-E' (V)

wherein R^{h} represents a hydrocarbon group, Q² is a divalent linking group and E' is an ethylenically unsaturated group. Examples of linking groups Q² include oxy, carbonyl, carbonyloxy, carbonamido, sulphonamido, oxyalkylene and poly(oxyalkylene).

Examples of non-fluorinated monomers from which the units M^{h} can be derived include general classes of ethylenic compounds capable of free-radical polymerization, such as, for example, allyl esters such as allyl acetate and allyl heptanoate; alkyl vinyl ethers or alkyl allyl ethers such as cetyl vinyl ether, dodecylvinyl ether, 2-chloroethylvinyl ether, ethylvinyl ether; unsaturated acids such as acrylic acid, methacrylic acid, alpha-chloro acrylic acid, crotonic acid, maleic acid, fumaric acid, itaconic acid and their anhydrides and their esters such as vinyl, allyl, methyl, butyl, isobutyl, hexyl, heptyl, 2-ethylhexyl, cyclohexyl, lauryl, stearyl, isobornyl or alkoxy ethyl acrylates and methacrylates; alpha-beta unsaturated nitriles such as acrylonitrile, methacrylonitrile, 2-chloroacrylonitrile, 2-cyanoethyl acrylate, alkyl cyanoacrylates; alpha,beta-unsaturated carboxylic acid derivatives such as allyl alcohol, allyl glycolate, acrylamide, methacrylamide, n-diisopropyl acrylamide, diacetoneacrylamide, N,N-diethylaminoethylmethacrylate, N-t-butylamino ethyl methacrylate; styrene and its derivatives such as vinyltoluene, alpha-methylstyrene, alpha-cyanomethyl styrene; lower olefinic hydrocarbons which can contain halogen such as ethylene, propylene, isobutene, 3-chloro-1-isobutene, butadiene, isoprene, chloro and dichlorobutadiene and 2,5-dimethyl-1,5-hexadiene, and allyl or vinyl halides such as vinyl and vinylidene chloride. Preferred non-fluorinated monomers include hydrocarbon group containing monomers such as those selected from octadecylmethacrylate, laurylmethacrylate, butylacrylate, N-methylol acrylamide, isobutylmethacrylate, ethylhexyl acrylate and ethylhexyl methacrylate; vinylchloride and vinylidene chloride.

The oligomeric fluorinated alcohol is conveniently prepared through a free radical polymerization of a fluorinated monomer with optionally a non-fluorinated monomer in the presence of a chain transfer agent. A free radical initiator is generally used to initiate the polymerization reaction. Commonly known free-radical initiators can be used and examples thereof include azo compounds, such as azobisisobutyronitrile (ABIN), azo-2-cyanovaleric acid and the like, hydroperoxides such as cumene, t-butyl and t-amyl hydroperoxide, dialkyl peroxides such as di-t-butyl and dicumylperoxide, peroxyesters such as t-butylperbenzoate and di-t-butylperoxy phthalate, diacylperoxides such as benzoyl peroxide and lauroyl peroxide.

The oligomeric fluorinated alcohol is typically prepared in the presence of a hydroxyl functionalized chain transfer agent. Examples of hydroxyl functionalized chain transfer agents include those selected from 2-mercaptoethanol, 3-mercapto-2-butanol, 3-mercapto-2-propanol, 3-mercapto-1-propanol and 3-mercapto-1,2-propanediol. A single compound or a mixture of different chain transfer agents may be used. A particularly suitable chain transfer agent is 2-mercaptoethanol.

The polymerization reaction can be carried out in any solvent suitable for organic free-radical reactions. The reactants can be present in the solvent at any suitable concentration, e.g., from about 5 percent to about 90 percent by weight based on the total weight of the reaction mixture. Examples of suitable solvents include aliphatic and alicyclic hydrocarbons (e.g., hexane, heptane, cyclohexane), aromatic solvents (e.g., benzene, toluene, xylene), ethers (e.g., diethylether, glyme, diglyme, diisopropyl ether), esters (e.g., ethyl acetate, butyl acetate), alcohols (e.g., ethanol, isopropyl alcohol), ketones (e.g., acetone, methylethyl ketone, methyl isobutyl ketone), sulfoxides (e.g., dimethyl sulfoxide), amides (e.g., N,N-dimethylformamide, N,N-dimethylacetamide), halogenated solvents such as methylchloroform, FREON™113, trichloroethylene, α,α,α-trifluorotoluene, and the like, and mixtures thereof.

The polymerization reaction can be carried out at any temperature suitable for conducting an organic free-radical reaction. Particular temperature and solvents for use can be easily selected by those skilled in the art based on considerations such as the solubility of reagents, the temperature required for the use of a particular initiator, molecular weight desired and the like. While it is not practical to enumerate a particular temperature suitable for all initiators and all solvents, generally suitable temperatures are between about 30° C and about 200° C.

Polyisocyanates that may be used to prepare the mixture of monomers include those that can be selected from one or more aliphatic isocyanates having 2, 3 or 4 isocyanate groups, one or more aromatic isocyanates having 2, 3 or 4 isocyanate groups and mixtures thereof. Examples of aliphatic diisocyanates include hexamethylenediisocyanate, 2,2,4-trimethyl-1,6-hexamethylenediisocyanate, and 1,2-ethylenediisocyanate, dicyclohexylmethane-4,4'-diisocyanate and 3-isocyanatomethyl-3,5,5-trimethylcyclohexylisocyanate (isophorone diisocyanate IPDI). Examples of aliphatic triisocyanates include 1,3,6-hexamethylenetriisocyanate, cyclic trimer of hexamethylenediisocyanate and cyclic trimer of isophorone diisocyanate (isocyanurates). Examples of aromatic diisocyanates include 4,4'-methylenediphenylenediisocyanate, 4,6-di-(trifluoromethyl)-1,3-benzene diisocyanate, 2,4-toluenediisocyanate, 2,6-toluene diisocyanate, o, m, and p-xylylene diisocyanate, 4,4'-diisocyanatodiphenylether, 3,3'-dichloro-4,4'-diisocyanatodiphenylmethane, 4,5'-diphenyldiisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3-naphthylene diisocyanate, and 1,8-dinitro-2,7-naphthylene diisocyanate. Exampels of aromatic triisocyanates include polymethylenepolyphenylisocyanate (PAPI).

Also useful are isocyanates containing internal isocyanate-derived moieties such as biuret-containing triisocyanates, such as DESMODUR™N100 or TOLONATE™HDB, commercially available from Bayer or Rhodia respectively ; isocyanurate-containing tri-isocyanates, such as IPDI-1890, commercially available from Huls AG ; azetidinedione-containing diisocyanates such as DESMODUR™TT, commercially available from Bayer. Also, other commercially available di- or tri-isocyanates such as DESMODUR™L and DESMODUR™W, tri-(4-isocyanatophenyl)-methane (DESMODUR™R) (all available from Bayer) and DDI 1410 (available from Cognis) are suitable.

Organic compounds having one or more ethylenically unsaturated groups include monomers having an isocyanate reactive group and monomers having an isocyanate functional group. Typically these monomers are non-fluorinated monomers and include isocyanate reactive vinyl ethers, acrylamides, acrylates and methacrylates and isocyanate functional acrylates, methacrylates and vinyl compounds.

Isocyanate reactive acrylate or methacrylate non-fluorinated monomers that may be used include those that can be represented by the formula VI:

T-Q³-(OC(O)C(R₂)=CH₂)ₜ, VI

wherein T represents an isocyanate reactive group, including OH or NR'H where R' is H or a lower alkyl group of 1 to 4 carbon atoms, Q³ represents an organic linking group having a valence of t+1 ; R₂ is a lower alkyl with 1 to 4 C atoms or H and t is 1 to 6. Linking group Q³ is independently selected from the group consisting of an alkylene, an arylene, an aralkylene, an alkarylene, a straight or branched chain or cyclic group containing connecting group optionally containing heteroatoms such as O, N, and S and optionally a heteroatom-containing functional group such as carbonyl or sulfonyl, and combinations thereof.

Suitable examples of isocyanate reactive acrylate or methacrylate non-fluorinated monomers include hydroxyethyl(meth)acrylate, 1,3-glycerol dimethacrylate, hydroxypropyl(meth)acrylate, butanediol monoacrylate, pentaerythritol triacrylate, commercially available as SR444 from Sartomer and dipentaerythritol pentaacrylate, commercially available as SR399 from Sartomer. Further suitable monomers include monomers comprising (poly)oxyalkylene groups including (meth)acrylates of a polyethylene glycol, (meth)acrylates of a block copolymer of ethylene oxide and propylene oxide, and (meth)acrylates of aminoterminated polyethers. Single isocyanate reactive acrylate or methacrylate non-fluorinated monomers can be used or mixtures thereof.

Useful isocyanate functional organic compounds having one or more ethylenically unsaturated groups include 2-isocyanato ethylmethacrylate (IEM), m-isopropenyl-α,α-dimethyl benzyl isocyanate (m-TMI) and methacryloyl isocyanate. Further useful isocyanate functional organic compounds include the reaction products of di- or polyisocyanates and isocyanate reactive acrylate or methacrylate monomers. Examples include the reaction product of isophorone diisocyanate with hydroxyethylacrylate or the reaction product of Desmodur®N with pentaerythritol triacrylate.

The mixture of monomers can be made in a one or a two step reaction. In one embodiment, the mixture can be made by first reacting the polyisocyanate with the fluorinated compound having an isocyanate reactive group, followed by reaction with an organic compound having one or more ethylenically unsaturated groups and at least one isocyanate reactive group. Alternatively, the mixture of monomers can be made by reacting the polyisocyanate with the organic compound having one or more ethylenically unsaturated groups and at least one isocyanate reactive group, followed by reaction with the fluorinated compound. In yet another embodiment, the monomer mixture can be made by reacting all components in a one pot reaction or single step reaction. By their method of synthesis, the resulting reaction products are normally mixtures.

In one embodiment, a mixture of fluorinated monomers can be prepared in a solvent free of isocyanate reactive groups. Suitable examples include ethyl acetate, acetone, methyl isobutyl ketone, toluene and halogenated solvents, such as C₄F₉OCH₃, C₄F₉OC₂H₅ and trifluorotoluene.

In one embodiment the composition in solvent can be turned into an aqueous dispersion by adding water and subjecting the composition to vigorous stirring in the presence of an emulsifier. To obtain a stable dispersion the mixture is then typically subjected to an ultrasonic treatment or a treatment in a high pressure homogenizer. Solventless aqueous dispersions can be prepared by subsequently removing the solvent by distillation.

In another embodiment, a mixture of fluorinated monomers can be produced without the need for an organic solvent.

In yet a further embodiment, a mixture of fluorinated monomers can be produced in the presence of a reactive diluent having at least one free radical polymerizable group as a solvent. Generally, the reactive diluent should not have a Zerewitinoff hydrogen, i.e. should not be an isocyanate reactive compound. This latter embodiment offers in particular the advantage that the resulting composition after the reaction does not require removal of organic solvent and may be used as is without further modifications to produce a cross-linked composition.

Suitable reactive diluent typically have an ethylenically unsaturated group and are free of isocyanate reactive groups. The reactive diluent is generally used to solubilise the reactants and the reaction products formed during the reaction. Particular useful diluents are liquid at a temperature of 20°C. Examples of suitable reactive diluents include monomers having an acrylate or methacrylate group, such as methyl methacrylate, n-butyl(meth)acrylate, isobutyl(meth)acrylate, octadecyl(meth)acrylate, lauryl(meth)acrylate, cyclohexyl (meth)acrylate, cyclodecyl (meth)acrylate, isobornyl (meth)acrylate, phenyl (meth)acrylate, phenoxyethyl acrylate, benzyl (meth)acrylate, adamantyl (meth)acrylate, tolyl (meth)acrylate, 3,3-dimethylbutyl (meth)acrylate, (2,2-dimethyl-1-methyl)propyl (meth)acrylate, cyclopentyl (meth)acrylate, 2-ethylhexyl (meth)acrylate, t-butyl (meth)acrylate, cetyl (meth)acrylate, stearyl (meth)acrylate, behenyl (meth)acrylate, isooctyl (meth)acrylate, n-octyl (meth)acrylate, 4-ethylcyclohexyl (meth)acrylate, 2-ethoxyethyl methacrylate, tetrahydrofurfuryl acrylate and tetrahydropyranyl acrylate. Further examples of suitable reactive diluents include di- and poly (meth)acrylates, such as butanedioldiacrylate, hexanedioldiacrylate and trimethylolpropanetriacrylate. Further suitable reactive diluents include monomers having one or more vinyl ether groups, such as cetyl vinyl ether, dodecylvinyl ether, ethylvinyl ether. Further reactive diluents include monomers having one or more N-vinyl amides, such as N-vinyl caprolactam and N-vinylformamide ; acrylamides, such as acrylamide, methacrylamide, n-diisopropyl acrylamide and diacetone acrylamide. Still further examples of reactive diluents include vinyl esters, such as vinyl 2-ethylhexanoate and vinyl-decanoate. Particularly suitable reactive diluents include methyl methacrylate and butanediol diacrylate.

The condensation reaction to form the mixture of fluorinated monomers is conveniently carried out under conventional conditions well-known to those skilled in the art. Suitable reaction temperatures will be easily determined by those skilled in the art based on the particular reagents, solvents, and catalysts being used. Suitable temperatures are between about room temperature and about 120°C.The fluorinated monomer mixture is typically prepared in the presence of a catalyst. Suitable catalysts include tin salts such as dibutyltin dilaurate, stannous octanoate, stannous oleate, tin dibutyldi-(2-ethyl hexanoate), stannous chloride and others known in the art. The amount of catalyst present will depend on the particular reaction. Generally, suitable catalyst concentrations are from 0.001 to 10 % by weight, particularly suitable between 0.1 % and 5% by weight based on the total weight of reactants.

In a particular embodiment, the cross-linking composition comprises one or more non-fluorinated monomers having one or more ethylenically unsaturated groups. In this embodiment, it will typically be preferred that at least one of the non-fluorinated monomers has at least two ethylenically unsaturated groups.

Suitable non-fluorinated monomers include mono- and difunctional acrylates and methacrylates. Examples include (meth)acryl monomers selected from the group consisting of methyl methacrylate, lauryl acrylate, tetrahydrofurfuryl acrylate, 2-phenoxyethyl acrylate ,tridecyl acrylate, di(meth)acryl containing compounds such as 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated (10) bisphenol A diacrylate, ethoxylated (3) bisphenol A diacrylate, ethoxylated (30) bisphenol A diacrylate, ethoxylated (4) bisphenol A diacrylate, hydroxypivalaldehyde modified trimethylolpropane diacrylate, neopentyl glycol diacrylate, polyethylene glycol (200) diacrylate, polyethylene glycol (400) diacrylate, polyethylene glycol (600) diacrylate, propoxylated neopentyl glycol diacrylate, tetraethylene glycol diacrylate, tricyclodecanedimethanol diacrylate, triethylene glycol diacrylate, tripropylene glycol diacrylate.

Further suitable non-fluorinated monomers include higher functionality (meth)acrylate monomers. Examples include tri(meth)acryl containing compounds such as PETA (pentaerythritol triacrylate). One commercially available form of pentaerythritol triacrylate ("PET3A") is SR444, available from Sartomer Company of Exton, Pennsylvania. Further examples include glycerol triacrylate, trimethylolpropane triacrylate, ethoxylated triacrylates (e.g., ethoxylated (3) trimethylolpropane triacrylate, ethoxylated (6) trimethylolpropane triacrylate, ethoxylated (9) trimethylolpropane triacrylate, ethoxylated (20) trimethylolpropane triacrylate), propoxylated triacrylates (e.g., propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate and tris(2-hydroxyethyl)isocyanurate triacrylate. Further suitable non-fluorinated monomers include for example pentaerythritol tetraacrylate, one commercially available form of pentaerythritol tetra-acrylate ("PET4A") is SR295, available from Sartomer Company of Exton, Pennsylvania. Further examples include ditrimethylolpropane tetraacrylate, dipentaerythritol pentaacrylate, ethoxylated (4) pentaerythritol tetraacrylate, caprolactone modified dipentaerythritol hexaacrylate and oligomeric (meth)acryl compounds such as, for example, urethane acrylates, such as aliphatic urethane di- and triacrylates, commercially available from Sartomer.

Still further examples include polyester acrylates, epoxy acrylates; polyacrylamide analogues of the foregoing; and combinations thereof. Such compounds are widely available from vendors such as, for example, Sartomer Company of Exton, Pennsylvania; Cytec Surface Specialties SA/NV, Drogenbos, Belgium and Aldrich Chemical Company of Milwaukee, Wisconsin. Additional useful (meth)acrylate materials include hydantoin moiety-containing poly(meth)acrylates, for example, as described in U.S. Patent No. 4,262,072 (Wendling et al.).

Further examples include di-vinyl ethers, such as 1,4-butane diol divinyl ether, diethylene glycol divinyl ether, cyclohexane dimethanol divinyl ether and triethylene glycol divinyl ether, all commercially available from BASF. In a suitable embodiment, mixtures of non-fluorinated monomers having one or more ethylenically unsaturated groups, of which at least one has at least two ethylenically unsaturated groups, can be used.

In a further embodiment, the cross-linking composition may additionally comprise a monomer having a reactive group selected from the group consisting of hydroxyl groups, amino groups, isocyanate groups, silanes and epoxy groups. Examples include 2-hydroxyethyl acrylate, 2-(t.butylamino)ethyl methacrylate, 2-isocyanato ethyl methacrylate, 3-trimethoxysilyl propyl (meth)acrylate, glycidyl (meth)acrylate,and 3-chloro-2-hydroxypropyl methacrylate. The addition of these monomers can enhance the cross-linking of the composition by reacting with functional groups present in the primer layer or with moisture.

When used, these monomers are typically added in an amount up to 10% by weight based on the total weight of fluorinated and non-fluorinated monomers.

To facilitate cross-linking, the compositions further comprise at least one free-radical or cationic initiator. Useful free-radical thermal initiators include, for example, azo, peroxide, persulfate, and redox initiators, and combinations thereof.

Useful free-radical photoinitiators include, for example, those known as useful in actinic radiation or e-beam radiation to cross-link compositions comprising ethylenically unsaturated monomers. Such initiators include benzophenone and its derivatives; benzoin, alpha-methylbenzoin, alpha-phenylbenzoin, alpha-allylbenzoin, alpha-benzylbenzoin; benzoin ethers such as benzil dimethyl ketal (commercially available under the trade designation "IRGACURE™ 651" from Ciba Specialty Chemicals Corporation of Tarrytown, New York), benzoin methyl ether, benzoin ethyl ether, benzoin n-butyl ether; acetophenone and its derivatives such as 2-hydroxy-2-methyl-1-phenyl-1-propanone (commercially available under the trade designation "DAROCUR™ 1173" from Ciba Specialty Chemicals Corporation) and 1-hydroxycyclohexyl phenyl ketone (commercially available under the trade designation "IRGACURE™ 184", also from Ciba Specialty Chemicals Corporation); 2-methyl-1-[4-(methylthio)phenyl]-2-(4-morpholinyl)-1-propanone commercially available under the trade designation "IRGACURE™ 907", also from Ciba Specialty Chemicals Corporation); 2-benzyl-2-(dimethylamino)-1-[4-(4-morpholinyl)phenyl]-1-butanone commercially available under the trade designation "IRGACURE™ 369" from Ciba Specialty Chemicals Corporation); aromatic ketones such as benzophenone and its derivatives and anthraquinone and its derivatives; onium salts such as diazonium salts, iodonium salts, sulfonium salts; titanium complexes such as, for example, that which is commercially available under the trade designation "CGI™ 784 DC", also from Ciba Specialty Chemicals Corporation); halomethylnitrobenzenes; and mono- and bis-acylphosphines such as those available from Ciba Specialty Chemicals Corporation under the trade designations "IRGACURE™ 1700", "IRGACURE™ 1800", "IRGACURE™ 1850","IRGACURE™ 819" "IRGACURE™ 2005", "IRGACURE™ 2010", "IRGACURE™ 2020" and "DAROCUR™ 4265". Combinations of two or more photoinitiators may be used. Examples include a mixture of benzophenone with Irgacure™184, commercially available under the trade designation "IRGACURE™ 184".

Cationic initiators, such as Lewis acids, are typically used for the polymerization and/or curing of vinyl ether monomers, typically in combination with conventional Friedel-Crafts catalysts, such as BF₃, AlCl₃ or SnCl₄. Radiation-induced polymerization of vinyl ether monomers is typically done in the presence of Cobalt-60.

The amount of initiator used will depend on the particular reaction. Generally, suitable initiator concentrations are from 0.1 % to 10% by weight, particularly suitable between 0.5% and 5% by weight based on the total weight of monomers. In a particular suitable embodiment, the cross-linking composition may be cross-linked in the presence of air.

In addition to the initiator, a cross-linking composition can include a photosensitizer. The photosensitizer aids in the formation of free radicals that initiate cross-linking, especially in an air atmosphere. For example, photosensitizers such as 2-isopropyl thioxanthone, commercially available from First Chemical Corporation, Pascagoula, MS, may be used in conjunction with a photoinitiator such as "IRGACURE™ 369". Further suitable photosensitizers include, but are not limited to, aromatic ketones and tertiary amines. Suitable aromatic ketones include, but are not limited to, benzophenone, acetophenone, benzil, benzaldehyde, and o-chlorobenzaldehyde, xanthone, 9,10-anthraquinone, and many other aromatic ketones. Suitable tertiary amines include, but are not limited to, methyldiethanolamine, ethyldiethanolamine, triethanolamine, phenylmethyl-ethanolamine and dimethyl aminoethyl benzoate. Typically, if used, an amount of photosensitizer is included in the cross-linking compositions to effect the desired level and rate of cross-linking. Preferably, the amount of photosensitizer used in the cross-linking compositions is about 0.01-10%, more preferably about 0.05-5%, and most preferably about 0.25-3% by weight, based on the total weight of the monomer solids. It should be understood that combinations of different photosensitizers can be used if desired.

The cross-linking composition may include optional additives. For example, if desired, the composition may include nano- and/or microparticles. Suitable examples include oligomeric or polymeric silsesquioxanes. Useful silsesquioxanes can be any of the types described in U.S. Pat. No. 4,781,844 (Kortmann, et al), U.S. Pat. No. 4,351,736 (Steinberger et al.), U.S. Pat. No. 5,073, 442 (Knowlton et al.) or U.S. Pat. No. 3,493,424 (Mohrlok et al.). These silsesquioxanes are derived from compounds of the formula R¹-Si(OR')₃ alone or together with silanes of the formula Si(OR')₄ wherein R¹ represents a substituted or unsubstituted hydrocarbon radical having 1 to 7 carbon atoms, substituents of which may be halogen atoms and amino, mercapto and epoxy groups, and up to 95% of the R¹ radicals may be methyl groups. R' represents an alkyl radical with 1 to 4 carbon atoms.

The silsesquioxanes may be prepared by adding silanes to a mixture of water, a buffer, a surface active agent and optionally an organic solvent, while agitating the mixture under acidic or basic conditions. It is preferable to add the quantity of silane uniformly and slowly in order to achieve a narrow particle size of 20 to 50 nanometers. The exact amount of silane which can be added depends on the substituent R¹ and whether an anionic or cationic surface active agent is used.

Copolymers of the silsesquioxanes in which the units can be present in block or random distribution are formed by the simultaneous hydrolysis of the silanes. The preferred amount of silane of the formula Si(OR')₄ added is about 2 to 50 percent, relative to the total weight of the silanes employed, preferably 3 to 20 percent.

Silanes useful in the synthesis of the silsesquioxanes include methyltrimethoxysilane, methyltriethoxysilane, methyltriisopropoxysilane, ethyltrimethoxysilane, ethyltriethoxysilane, propyltrimethoxysilane, isobutyltrimethoxysilane, isobutyltriethoxysilane, 2-ethylbutyltriethoxysilane, tetraethoxysilane, and 2-ethylbutoxytriethoxysilane.

The silsesquioxanes may be added to the cross-linking composition in amounts between 0 and 75% by weight based on the total weight of the solids in the composition. Particularly suitable amounts are between 10% and 40% by weight. It has been found that the addition of silsesquioxanes typically lowers the gloss of the coated leather substrate generally without substantially influencing the soil repellency properties.

The cross-linking composition may further include other optional additives. For example, the composition may include antistatic agents, wetting agents, waxes, levelling agents, UV-stabilizers and absorbers, ozon stabilizers, thermal stabilizers, antioxidants, fillers, lubricants, pigments, dyes, plasticizers, suspending agents, flow agents, viscosifiers and touch modifiers.

Useful wetting agents include ionic wetting agents, such as DOSS (sodium dioctyl sulfosuccinate), available from Cytec Industries, and neutral wetting agents, such as isopropanol, butanol, butoxy ethanol and butoxy propanol.

Examples of levelling agents include, but are not limited to, alkylene oxide terminated polysiloxanes, such as those available under the trade designation "DOW 57" (a mixture of dimethyl-, methyl-, and (polyethylene oxide acetate-capped) siloxane) from Dow Coming, Midland, Mich.; and fluorochemical surfactants such as those available under the trade designations "FC4430", and "FC4432", from Minnesota Mining and Manufacturing Company Co., St. Paul, Minn. Combinations of different levelling agents can be used if desired. Preferably, if a levelling agent is to be included in the composition, the levelling agent is present in an amount effective to improve the flow and wetting characteristics of the composition. Generally, the levelling agent will be effective to impart these desired characteristics in amounts of up to about 3% by weight, and more preferably from about 0.5 to about 1%, based on the total weight of the cross-linked composition.

Both ultraviolet stabilizers and ultraviolet absorbers can improve the weatherability and reduce the time-induced discoloration of the cross-linked composition. An example of an ultraviolet absorber suitable for use in the cross-linked composition of the present invention is that commercially available under the trade designation "TINUVIN 1130" (hydroxyphenyl benzotriazole) and an example of an hindered amine light stabilizer is that commercially available under the trade designation "TINUVIN 292" (bis(1,2,2,6,6-pentamethyl-4-piperidinyl)sebacate), both of which are available from Ciba-Geigy. The cross-linkable composition can include an amount of a stabilizer, an absorber, or a combination thereof to impart the desired result. Preferably, the ultraviolet stabilizer and/or absorber is present in an amount up to about 10% by weight, and more preferably about 1-5%, based on the total weight of the cross-linkable composition solids. It should be understood that combinations of different ultraviolet stabilizers and absorbers can be used if desired.

An ozone stabilizer protects against degradation resulting from reaction with ozone. Examples of ozone stabilizers include, but are not limited to, hindered amines such as that available under the trade designation "IRGANOX 1010" from Ciba-Geigy and phenothiazine commercially available from Aldrich Chemical Company, Inc., Milwaukee, Wis. The cross-linkable composition can include an amount of an ozone stabilizer to impart the desired result. Preferably, the ozone stabilizer is present in an amount up to about 1% by weight, more preferably from about 0.1 to about 1.0%, and most preferably from about 0.3 to about 0.5%, based on the total weight of the cross-linked composition. It should be understood that combinations of different ozone stabilizers can be used if desired.

A thermal stabilizer/antioxidant reduces the amount of yellowing as a result of weathering. Examples of such materials include, but are not limited to, low melting hindered phenols and triesters. Specific examples include 2,6-di-tert-butyl-4-methylphenol, commercially available under the trade designation "ULTRANOX 226" from Borg Warner Chemicals, Inc., Parkersburg, N.Y.; octadecyl 3,5-di-tert-butyl-4-hydroxyhydroxcinnamate, commercially available under the trade designations "ISONOX 132" antioxidant from Schenectady Chemicals, Inc., Schenectady, N.Y.; or "VANOX 1320" commercially available from Vanderbilt Co., Inc., Norwalk, Conn. The cross-linked composition can include an amount of the thermal stabilizer/antioxidant to impart the desired result. Preferably, the thermal stabilizer/antioxidant is present in an amount up to about 3% by weight, and more preferably about 0.5-1 %, based on the total weight of the cross-linked composition solids. It should be understood that combinations of different thermal stabilizers/antioxidants can be used if desired.

The cross-linking composition as described above, can be applied to a leather substrate having thereon a primer layer, as 100% active composition or as an aqueous dispersion. Generally, the aqueous dispersion as a concentrate comprises 3 to 50% by weight of active compounds and 0.5 to 15% by weight of one or more dispersing agents, the remainder being water and additives).

Examples of dispersing agents include anionic, cationic, zwitterionic and non-ionic emulsifiers.

The aqueous dispersion typically includes viscosifiers which, when added to the aqueous dispersion, increase the viscosity without substantially modifying the other properties. The viscosifiers contribute to the formation of a homogeneous film on the leather substrate. Examples of useful viscosifiers include for example alkali-swellable thickeners, associative thickeners and inverse emulsion thickeners.

Of particular interest are inverse emulsion thickeners. Inverse emulsion thickeners include acrylic polymers and acrylamide polymers and the ammonium or sodium salts thereof. Inverse emulsion thickeners are commercially available and include for example Texipol™ 63-258, Texipol™ 63-201, Texipol™ 63-202, Texipol™ 63-253, Texipol™ 63-237 and Texipol™ 63-510, all commercially available from Scott Bader Co, Ltd, UK.

Generally, the aqueous dispersion comprises 0.5 to 10 % by weight of a viscosifier. The amount of cross-linking composition applied to the coated leather substrate in accordance with this invention is chosen so that desirable overall coating properties and good soil repellent and stain release characteristics are imparted to the leather article, said amount usually being such that the thickness of the top layer is between 0.1 and 50 g/m², typically between 0.5 and 30 g/m², particularly between 3 and 20 g/m². Suitably the weight percent fluor relative to the total weight of the top layer is between 0.1% and 65% by weight, typically between 0.5% and 40% by weight, particularly between 1 and 20% by weight.

The amount which is sufficient to impart desired repellency can be determined empirically and can be modified as necessary or desired. The cross-linking composition can be coated onto the leather substrate having thereon a primer layer using a variety of techniques, including spray application or bar coat application. Coatings can be applied as a single layer or as two or more superimposed layers.

Leather subtrates having thereon a primer layer and a top layer comprising a cross-linked composition having fluorinated segments can be used to manufacture a variety of leather articles. Particularly suitable leather articles include a piece of furniture, a seat, car interior, stirring wheels, shoes, belts, handbags, garments and gloves.

### EXAMPLES

The following examples further illustrate the invention without the intention however to limit the invention thereto. All parts are by weight unless indicated otherwise.

### ABBREVIATIONS

| **Abbreviations** | **Product** | **Availability** |
|---|---|---|
| Ebecryl™ 1608 | Bisphenol epoxy diacrylate | Cytec Industries BV, Belgium |
| TPGDA | Tripropylene glycol diacrylate | Aldrich |
| SR339 C | 2-PhOEA: 2-Phenoxyethyl acrylate | Sartomer, Cray Valley |
| DOSS | Sodium dioctyl sulfosuccinate, 70% in water, available as Aeorosol OT-70 PG | Cytec Industries BV, Belgium |
| Desmodur™ N | HMDI biuret | Bayer |
| SR444 | Pentaerythritol triacrylate | Sartomer, Cray Valley |
| SR399 | Dipentaerythritol penta acrylate | Sartomer, Cray Valley |
| SR399LV | Low viscosity dipentaerythritol penta acrylate | Sartomer, Cray Valley |
| TINUVIN™ 292 | Liquid hindered amine light stabilizer | Ciba Specialty Chemicals |
| m-TMI™ | m isopropenyl-α,α-dimethylbenzyl isocyanate | Cytec Industries BV, Belgium |
| SERMUL™ EA 266 | C13 alcohol polyethylene glycol ether (15EO) suphate, Na salt | Elementis Specialties Netherlands B.V., the Netherlands |
| Irgacure™ 500 | Mixture of 1-Hydroxy-cyclohexyl-phenyl-ketone and benzophenone | Ciba Specialty Chemicals |
| Texipol™ 63-258 | Inverse emulsion thickener | Scott Bader Company Ltd, UK |
| SSQO | Silsesquioxane | Synthesis according to US6468587, column 3, line 39-60, except that 365 g methyltriethoxysilane and 15 g tetraethoxysilane were used instead of 280 g methyltrimethoxysilane |
| HFE 7200 | C₄F₉OC₂H₅ | 3M |
| MeFBSE | C₄F₉SO₂N(CH₃)CH₂CH₂OH | Made by reacting perfluorobutane sulfonyl fluoride with CH₃NH₂ and ethylene chlorohydrin, essentially according to US2803656, ex 1 |
| HFPO-alc | HFPO-alcohol: F(CF(CF₃)CF₂O)_{6.85}CF(CF₃)C(O)NHC H₂CH₂OH | Synthesis described in 'Synthesis intermediates' |
| HFPO-MA | HFPO-methacrylate: F(CF(CF₃)CF₂O)_{6.85}CF(CF₃)C(O)NHC H₂CH₂OC(O)C(CH₃)=CH₂ | Synthesis described in 'preparation of intermediates' |
| HFPO-MA Oligomer | F(CF(CF₃)CF₂O)_{6.85}CF(CF₃)C(O)NHC H₂CH₂OC(O)C(CH₃)=CH₂ /2-mercaptoethanol 4/1 | Synthesis described in 'Synthesis intermediates' |
| MeFBSEA | C₄F₉SO₂N(CH₃)CH₂CH₂O C(O)-CH=CH₂ | Prepared according to WO 200400957, pages 25-26 |
| C4-oligomer | MeFBSEA/2-mercaptoethanol 4/1 | Synthesis described in 'Synthesis intermediates' |

### PREPARATION OF MONOMER DISPERSIONS

### A. SYNTHESIS OF INTERMEDIATES

### 1. Synthesis of HFPO-alc : F(CF(CF₃)CF₂O)_{6.85}CF(CF₃)C(O)NHCH₂CH₂OH HFPO-alc was prepared according to WO2007121110, page 17, lines 17-32.

### 2. Synthesis of C4-oligomer: MeFBSEA/2-mercaptoethanol 4/1

A 3 1 reaction flask, equipped with 2 reflux condensers, a mechanical teflon blade stirrer, a thermometer, a nitrogen inlet and vacuo outlet, was charged with 2.4 moles MeFBSEA and 987 g ethylacetate. The mixture was heated to 40°C until all fluorochemical monomer was dissolved. 0.6 moles 2-mercaptoethanol and 0.15% ABIN was added and the solution was heated to 80°C, while stirring at 160 rpm. The reaction was run under nitrogen atmosphere at 80°C during 16 hours.

### 3. Synthesis of HFPO-MA:

F(CF(CF₃)CF₂O)_{6.85}CF(CF₃)C(O)NHCH₂CH₂OC(O)C(CH₃)=CH₂
In a 500 ml three necked flask fitted with a stirrer, thermometer and condenser were placed, 126.1 g (0.1 moles) of (HFPO)-alc, 60 g methylethyl ketone, 60g HFE-7200, 10.1 g (0.1 moles) triethylamine, 0.01 g MEHQ and 0.01 g phenothiazine. The mixture was cooled to 5°C in an ice bath. Then 11.5 g (0.11 moles) methacryloylchloride were added dropwise over 1 hour under nitrogen atmosphere. An exothermic reaction was noticed and precipitate was formed. The temperature was allowed to rise to 25°C under stirring over 1 hr. The reaction was continued for 1 hr under nitrogen at 50°C. The resulting reaction mixture was washed 3 times with 200 ml of water and the organic layer was separated off. All solvents were distilled off at 50°C under vacuum. A clear liquid resulted, which was identified to be (HFPO)-methacrylate.

### 4. Synthesis of HFPO-MA oligomer: HFPO-MA/2-mercaptoethanol 4/1

A 250 ml polymerization bottle was charged with 66.3 g HFPO-MA, 0.98 g 2-mercaptoethanol, 100 g ethylacetate and 0.2g V-59 initiator. The bottle was 4 times degassed and purged with nitrogen. The reaction was run in a launderometer at 75°C during 7 hours. After cooling, another 0.2g V-59 was added and the reaction was run in the launderometer at 75°C during another 16 hours. A third charge of 0.2g V-59 was added and the reaction was run in a launderometer at 75°C during 16 hours. A yellow solution of HFPO-MA oligomer at 40% solids was obtained.

### B. PREPARATION OF NON-FLUORINATED MONOMER MIXTURES

### 1. Non-fluorinated monomer mixtures M1 to M3.

Aqueous monomer dispersions as indicated in table 1 were prepared by adding 28 g monomer mixture, preheated to 65 °C, to a solution of 6.22 g Sermul™ EA-266 and 40.0 g deionized water, at a temperature of 65°C while stirring. The mixture was then run with a Branson 450 ultra-sound horn for 2 minutes. Milky coarse monomer dispersions (M1aq, M2aq, M3aq) at about 40% solids were obtained.

**Table 1 : monomer dispersions (weight % based on total monomer mix)**

| Monomer mix | SR 399 | Ebecryl 1608 | TPGDA | 2-PhOEA |
|---|---|---|---|---|
| M1 | 45 | 25 | 30 | 0 |
| M2 | 0 | 40 | 60 | 0 |
| M3 | 0 | 40 | 40 | 20 |

### 2. Non-fluorinated monomer mixtures M4 to M6

Aqueous monomer dispersions M4 to M6 having a composition as given in table 2 were prepared according to the same procedure. 28 g monomer mixture, pre-heated at 65 °C, was added to a solution of 6.22 g Sermul™ EA-266 and 31.7 g deionized water, at 65°C, while stirring. The mixture was then run with a Branson 450 ultra-sound horn for 2 minutes. Milky coarse monomer dispersions (M4aq to M6aq) of about 45% solids were obtained. To these monomer mixtures were also added 1% by weight of Tinuvin™ 292 light stabilizer.

**Table 2 : monomer dispersions (weight % based on total monomer mix)**

| Monomer mix | SR 399 | TPGDA | m-TMI |
|---|---|---|---|
| M4 | 50 | 50 | 0 |
| M5 | 47.5 | 47.5 | 5 |
| M6 | 45* | 45 | 10 |

| | | | |
|---|---|---|---|
| *: note: made with SR399 LV: low viscosity SR399 | | | |

### 3. Non-fluorinated monomer mixtures M7 to M9

Aqueous monomer dispersions M7 and M8 having a composition as given in table 3 were prepared according to the same procedure. 20 g monomer mixture, pre-heated at 65 °C, was added to a solution of 4.44g Sermul™ EA-266 and 76.5 g deionized water, at 65°C, while stirring. The mixture was then run with a Branson 450 ultra-sound horn for 2 minutes. Milky coarse monomer dispersions (M7aq and M8aq) at about 21% solids were obtained. An aqueous dispersion of M9 (having a composition as given in table 3) was made according to the same procedure but deionised water was added to obtain a 45% solids dispersion (M9aq1) or a 14% solids dispersion (M9aq2).

**Table 3 : monomer dispersions (weight % based on total monomer mix)**

| Monomer mix | SR 399 | TPGDA |
|---|---|---|
| M7 | 50* | 50 |
| M8 | 65* | 35 |
| M9 | 55 | 45 |

| | | |
|---|---|---|
| Note: *: made with SR399 LV. | | |

### C. PREPARATION OF FLUORINATED MONOMERS

### 1. FC-1:

C₃F₇O-(CF(CF₃)CF₂O)ₙ-CF(CF₃)CONH-CH₂CH₂OH / Desmodur™ N / SR444 (mole ratio 0.15 / 1 / 0.85):

### a. 50% solids solution of FC-1 in ethylacetate:

A 50% solids solution of the perfluoropolyether urethane polyacrylate FC-1 was prepared according to the procedure for reaction product No 4 (RP-4) in US 20070243389.

### b. Aqueous dispersion of FC-1: FC-1aq

An aqueous dispersion of FC-1 was prepared as follows:
1000 g of the 50% FC-1 solution in ethylacetate was heated to 60°C and added to a 60°C aqueous solution of 92.6 g Sermul™ EA266 in 642 g water while stirring. The mixture was passed twice through a 2-stage Manton-Gaulin homogenizer set at 250/50 bar. Ethylacetate was distilled off with a rotary evaporator using water jet vacuum to obtain a 43.6% aqueous dispersion of FC-1.

### 2. FC-2

C₃F₇O-(CF(CF₃)CF₂O)ₙ-CF(CF₃)CONH-CH₂CH₂OH / Desmodur™N / SR444 (mole ratio 0.15/1/0.85)
A 60% perfluoropolyether urethane acrylate FC-2 was prepared in methylmethacrylate, according to the procedure described for RP-1 in US 20070243389.

### 3. FC-3 to FC-10

### a. Synthesis FC-3 to FC-10

Synthesis of FC-3: HFPO-alc/Desmodur™N/SR444D (mole ratio: 0.45/1/2.55):
A 100 ml polyerization bottle was charged with 9.4 g HFPO-alc, 9.6 g Desmodur™N, 0.02 g 2,6 di Tert butyl 4-methyl phenol and 40.4 g ethylacetate. 0.01 g DBTDL was added and the reaction was run in a Launderometer at 75°C during 2 hrs. The mixture was cooled and 21.4 g SR444D was added. The reaction was run in the Launderometer at 75°C for 3 hours. FTIR indicated that no remaining NCO groups.

Fluorinated monomers FC-4 to FC-10 having a composition as given in table 4 were prepared according to the same general procedure. Therefore, all ingredients listed in columns 1 to 5 were charged in a polymerization bottle. Ethylacetate was added to prepare a 50% solids mixture. 0.025% DBTDL catalyst and 0.05 % 2,6 di-tert butyl 4-methyl phenol were added and the reaction was run for 2 hours at 75°C. Ingredients of columns 6 or 7 were added and the reaction was run for another 3 hours at 75°C.

**Table 4: Composition of FC-3 to FC-10 (molar ratio)**

| 1 | 2 | 3 | 4 | 5 | 6 | 7 | |
|---|---|---|---|---|---|---|---|
| FC | HFPO-alc | MeFBSE | C4-oligomer | Desmodur™N | SR444D | HEA | % solids emulsion |
| FC-3 | 0.45 | / | / | 1 | 2.55 | / | 52.0 |
| FC-4 | / | / | 0.45 | 1 | 2.55 | / | 57.2 |
| FC-5 | 0.45 | / | / | 1 | / | 2.55 | 54.4 |
| FC-6 | / | / | 0.45 | 1 | / | 2.55 | 54.3 |
| FC-7 | 1 | / | / | 1 | / | 2 | 55.3 |
| FC-8 | / | / | 1 | 1 | / | 2 | 56.7 |
| FC-9 | / | 1 | / | 1 | 2 | / | 49.8 |
| FC- 10 | / | 1 | / | 1 | / | 2 | 55.7 |

### b. Synthesis of FC-11 and FC-12

FC-11 and FC-12 having a composition as given in table 5 were prepared by charging a polymerization bottle with HFPO-MA oligomer and Desmodur™N in amounts as given in table 5. Ethylacetate was added to obtain a 45% solids solution. 0.07% 2,6 di tert butyl methyl phenol and 0.1% DBTDL were added. The reaction was run at 75°C for 1 hour in a launderometer. 2 phases were formed. SR444D was added and the reaction was continued for 16 hours at 75°C. FTIR indicated that all NCO groups had reacted. A 2 phase liquid was obtained, forming a milky mixture when shaken.

**Table 5: composition of FC-11 and FC-12 (molar ratio)**

| FC | HFPO-MA oligomer | Desmodur™N | SR444D | % solids emulsion |
|---|---|---|---|---|
| FC-11 | 0.15 | 1 | 2.85 | 40.7 |
| FC-12 | 0.075 | 1 | 2.925 | 44.0 |

### c. Emulsification of FC-3 to FC-12

Aqueous emulsions were prepared from FC-3 to FC-12 according to the procedure for FC-3: The solution of FC-3 in ethylacetate, obtained under synthesis a. above was heated to 65°C and added to a 65°C aqueous solution of 4.63 g Sermul™ EA266 in 23 g water while stirring. The mixture was run with a Branson 450 ultra-sound horn for 2 minutes (10 sec interval). Ethylacetate was distilled off at a temperature between 50°C and 60°C using water jet vacuum to obtain a 52% solids emulsion of FC-3.

### METHODS OF APPLICATION

Treatment mixtures were applied as water based formulations or as 100% active monomer formulations. Depending on the formulation, different coating methods were used:

### A. Coating method for aqueous UV-curable formulations:

### a. Bar coating application

The coating solutions were coated on the substrate using a 24µ, K Hand Coater Bar (available from RK Print Coat Ltd, UK) at room temperature. The coated substrates are dried for 2 or 3 minutes at 65°C or 80°C (as indicated in the examples) in a Werner Mathis oven and subsequently cured with an ultraviolet (UV) curing device (available from American UV Co., Murray Hill, NY, USA) equipped with a mercury medium pressure H bulb AUV6A/300 OF. The samples were passed several times through the UV instrument at 200 W/inch to obtain full curing of the coating.

### b. Spray application

An amount of 1.25 g product mix was sprayed crossways on a 0.5 square ft (0.0465 m²) of substrate using an air-atomized spray gun at 3 bar pressure and 1,5 mm tip, followed by drying 2 or 3 minutes at 65°C or 80°C (as indicated in the examples) in a Werner Mathis oven. This spray and dry procedure is carried out twice. The samples were subsequently cured with an ultraviolet (UV) curing device (available from American UV Co., Murray Hill, NY, USA) equipped with a mercury medium pressure H bulb AUV6A/300 OF. The samples were passed several times through the UV instrument at 200 W/inch to obtain full curing of the coating.

### B. Coating method for 100% active UV-curable formulations

The coating solutions were coated using the bar coating application. The coating on the substrate was made using a 6µ K Hand Coater Bar (available from RK Print Coat Ltd, UK) at room temperature. The coated substrates are subsequently cured with an ultraviolet (UV) curing device (available from American UV Co., Murray Hill, NY, USA) equipped with a mercury medium pressure H bulb AUV6A/300 OF. The samples are passed several times through the instrument at 200 W/inch to obtain full curing of the coating.

### C. Coating method for thermal cure reference and comparative top-coats

### a. Bar coating application

The coating solutions were coated on the substrate using a 24µ K Hand Coater Bar (available from RK Print Coat Ltd, UK) at room temperature. The coated substrates are cured for 2 minutes at 80°C in a Werner Mathis Oven.

### b. Spray application

An amount of 1.25 g product mix was sprayed crossways on a 0.5 square ft (0.0465 m²) of substrate using an air-atomized spray gun at 3 bar pressure and 1.5 mm tip, followed by curing 2 minutes at 80°C in a Werner Mathis oven. The spray and dry procedure was carried out twice. Depending on the concentration of the product mix, a theoretical coating thickness between 24µ (45% solids mixture) and 4µ (7.5% solids mixture) was obtained.

### D. Substrates:

The compositions were tested on following substrates:

| Substrate | Kind | Available from |
|---|---|---|
| Substrate 1 | Beige base-coated smooth grain automotive leather | TFL, Germany |
| Substrate 2 | beige base-coated smooth grain automotive leather type Alpacagrau NAPPA KOMBI | Seton Lederfabrik GmbH |
| Substrate 3 | white base-coated embossed grain upholstery leather | TFL, Germany |
| Substrate 4 | purple base-coated smooth shoe leather | TFL, Germany |

### TESTING PROCEDURES

The treated substrates were subjected to following testing procedures:

### A. Soiling test method A: test with EMPA fabric No.104 (indicated as "Soil A")

Test specimens with a diameter of 140 mm are cut out of the coated substrate, using a circular cutting device. The test samples were evaluated on a Martindale Abrasion and Pilling tester in pilling mode, using EMPA 104 fabrics obtained from EMPA Test materials (Switzerland). EMPA 104 is a plain woven polyester/cotton 65/35 fabric soiled with a mixture of IEC carbon black and olive oil. The fabric is fitted to the pilling holder head and the test specimen is mounted on the abrading table with a wool felt underlay. The tests were run with a 12kPa weight for 250 cycles using a Lissajous pattern (C-C-C position).
The degree of soiling (ΔE soiled) was measured using a Minolta colorimeter, taking the base-coated (unsoiled) substrate as the reference. The results are recorded as "ΔE Soil A - soiled"
Subsequently 50% of the circular soiled surface was cleaned with a leather cleaner (obtained from Uniters S.p.A., Italy) using a sponge. The degree of soiling was then measured again with a Minolta colorimeter. The results are recorded as "ΔE Soil A - cleaned"

### B. Soiling test method B: test with EMPA fabric No.170 (indicated as "Soil B")

Test specimens with a diameter of 140 mm are cut out of the coated substrate using a circular cutting device. The test samples were evaluated on a Martindale Abrasion and Pilling tester in pilling mode, using EMPA Jeans Fabric No. 170 obtained from EMPA Testmaterials (Switzerland).
EMPA Jeans 170-7-1172 is cotton jeans indigo/sulfur black dyed, soiled with a mixture of sebum, carbon black and sweat.
The EMPA Jeans 170 was fitted to the pilling holder head and the test specimen was mounted on the abrading table with a wool felt underlay. The tests were run with a 12kPa weight for 1000 cycles using a Lissajous pattern (C-C-C position).
The degree of soiling (ΔE soiled) was measured using a Minolta colorimeter, taking the base-coated unsoiled substrate as the reference. The results are recorded as "ΔE Soil B - soiled"
Subsequently 50% of the circular soiled surface was cleaned with a leather cleaner (obtained from Uniters S.p.A., Italy) using a sponge. The degree of soiling was then measured again with a Minolta colorimeter (ΔE cleaned). The results are recorded as "ΔE Soil B - cleaned"

### C. Household stain tests (indicated as "Soil C")

An amount of the household liquid (hot coffee, red wine: 5 ml; ketchup: 2 ml) was applied on the test specimen with a pipette and spread around within a circular aluminum ring of 7 cm diameter. The stained substrate was conditioned for 24 hours. Excess liquid was first removed with a cloth, then the surface was cleaned with a wet sponge (= cleaning with water), followed by cleaning with a leather cleaner (obtained from Uniters S.p.A., Italy) using a sponge (= cleaning with water and leather cleaner).
The degree of staining was then measured using a Minolta colorimeter, taking unstained substrate as the reference. The degree of soiling is indicates as ΔE coffee, ΔE red wine and ΔE ketchup.

### D. Marker stain tests

### 1. Stain repellency test (indicated as "Soil D-1")

The marker/stain /ink/paint repellency was rated on a scale of 0 to 5:
0: paint drops fully beaded up
5: paint wets the surface completely

### 2. Stain resistance (stain release method) (indicated as "Soil D-2")

A 4 cm diameter circular template was filled with a permanent marker. The stain was dried for 30 minutes. Stain removal was tested by rubbing for 20 seconds with a dry cotton cloth.

The residual stains were then visually rated on the 8 point 3M Stain Release scale:

| | | | |
|---|---|---|---|
| 1: | completely stained | 8: | no stain left |

### 3. Ease of stain removal (indicated as "Soil D-3")

The ease of stain removal in the stain resistance test (via rubbing with a dry cotton cloth) was rated on a scale from 1 to 3:

| | | | | | |
|---|---|---|---|---|---|
| 1: | easy removal | 2: | medium | 3: | difficult removal |

### EXAMPLES

### Examples 1 to 3 and comparative example C-1

In examples 1 to 3, 100 parts of monomer dispersions M1aq to M3aq respectively were mixed with 2.8 parts FC-1aq, 2 parts DOSS and 3 parts Irgacure 500. The components were mixed until a homogeneous liquid was obtained. Comparative example C-1 was made with a thermal cure polyurethane topcoat, available from TFL. Substrate 1 was coated with the compositions of examples 1 to 3 using the bar coating application A(a) using 2 minutes drying time at 65°C. Substrate 1 was coated with the composition of comparative examples C-1 using the bar coating application C(a). The anti-soiling characteristics of the coated samples were evaluated according to the test methods "Soil A" and "Soil B". The results are given in table 6.

**Table 6: anti-soiling properties of coated leather substrates having a topcoat (ΔE)**

| Ex | ΔE Soil A Soiled | ΔE Soil A Cleaned | ΔE Soil B Soiled | ΔE Soil B Cleaned |
|---|---|---|---|---|
| 1 | 2.0 | 1.1 | 1.3 | 1.1 |
| 2 | 4.8 | 1.7 | 3 | 1.4 |
| 3 | 3.6 | 1.8 | 2.4 | 1.4 |
| C-1 | 11.1 | 1.7 | 7.2 | 2.6 |

### Examples 4 and 5 and comparative example C-2

Examples 4 and 5 were made with monomer mixtures M4aq and M5aq. 100 parts of monomer dispersions M4aq and M5aq respectively were mixed with 3.1 parts FC-1aq, 1 parts DOSS and 1.5 parts Irgacure™ 500. The components were mixed until a homogeneous liquid was obtained. Comparative example C-2 was made with a thermal cure anti-soiling topcoat, available from TFL. In examples 4 and 5 substrates 1 and 3 were coated and cured according to method A(a) and applying 3 minutes drying at 65°C. In comparative example C-2 substrates 1 and 3 were coated and cured according to method C(a). The anti-soiling characteristics of coated substrate 1 were tested using soiling test methods A and B. The anti-soiling characteristics of coated substrate 3 were tested using soiling test method C. The results are given in table 7.

**Table 7: anti-soiling properties Substrate 1 (ΔE)**

| Ex | Coated Substrate 1 | | | | Coated substrate 3 | | |
|---|---|---|---|---|---|---|---|
| Ex | ΔE Soil A Soiled | ΔE Soil A Cleaned | ΔE Soil B Soiled | ΔE Soil B Cleaned | ΔE Coffee | ΔE Ketchup | ΔE Red wine |
| 4 | 1.2 | 0.6 | 3.0 | 0.7 | 10.6 | 3.8 | 5.0 |
| 5 | 1.5 | 0.7 | 2.4 | 0.7 | 9.8 | 4.0 | 5.1 |
| C-2 | 3.2 | 0.2 | 9.0 | 2.0 | 15.0 | 7.4 | 6.9 |

### Examples 6 and 7 and comparative example C-3

Examples 6 and 7 were made with monomer mixtures comprising M6aq as given in table 8. The mixtures were sprayed on substrate 1 and cured according to method A(b), using 2 minutes drying at 80°C. Comparative example C-3 was made with a thermal cure polyurethane topcoat, available from TFL, and applied to substrate 1 using application C(b). The anti-soiling characteristics of the coated substrates were tested using soiling cycles of test methods A and B. The anti-soiling characteristics are given in tables 9 and 10 and represent the soiling results after repeated soiling, without cleaning (indicated in the table as "Soil A or B soiled"), after repeated soiling-cleaning-soiling cycle (indicated as "Soil A or B cleaned+resoiled") and after repeated soiling-cleanings (indicated as "Soil A or B cleaned").

**Table 8 : composition of treating mixtures (parts by weight)**

| Ex | FC-1aq | DOSS | Texipol 63-258 | Irgacure 500 | M6aq | H₂0 |
|---|---|---|---|---|---|---|
| 6 | 1.82 | 0.26 | 0 | 1.8 | 60 | 0 |
| 7 | 1.21 | 0 | 0.70 | 1.76 | 40 | 18.67 |

**Table 9: anti-soiling properties - repeated soiling method A (ΔE)**

| | ΔE Soil A soiled | | | | ΔE Soil A cleaned+ resoiled | | | ΔE Soil A cleaned | | | |
|---|---|---|---|---|---|---|---|---|---|---|---|
| Ex | 1^{st} | 2^{nd} | 3^{rd} | 4^{th} | 2^{nd} | 3^{rd} | 4^{th} | 1^{st} | 2^{nd} | 3^{rd} | 4^{th} |
| 6 | 0.6 | 1.7 | 2.0 | 2.1 | 4.5 | 4.7 | 4.9 | 0.5 | 2.1 | 2.7 | 2.9 |
| 7 | 2.0 | 1.7 | 2.0 | 2.3 | 2.3 | 2.2 | 2.6 | 1.0 | 0.9 | 1.0 | 1.1 |
| C-3 | 9.9 | 16.9 | 21.5 | 24.0 | 14.3 | 18.0 | 18.7 | 4.8 | 7.6 | 9.0 | 10.5 |

**Table 10: anti-soiling properties - repeated soiling method B (ΔE)**

| | ΔE Soil B soiled | | | | ΔE Soil B cleaned+ resoiled | | | ΔE Soil B cleaned | | | |
|---|---|---|---|---|---|---|---|---|---|---|---|
| Ex | 1^{st} | 2^{nd} | 3^{rd} | 4^{th} | 2^{nd} | 3^{rd} | 4^{th} | 1^{st} | 2^{nd} | 3^{rd} | 4^{th} |
| 6 | 1 | 0.6 | 0.8 | 0.9 | 3.5 | 3.2 | 3.3 | 1.1 | 1.2 | 1.8 | 2.0 |
| 7 | 2.4 | 3.7 | 3.4 | 3.7 | 2.1 | 2.0 | 1.8 | 0.7 | 0.7 | 0.7 | 0.7 |
| C-3 | 16.6 | 21.5 | 25.6 | 29.0 | 24.5 | 24.9 | 26.3 | 7.6 | 11.7 | 13.9 | 15.4 |

### Example 8 and comparative example C-4

In example 8, a mixture was made containing 1.82 parts FC-1 aq, 1.8 parts Irgacure™ 500, 1.1 parts Texipol™ 63-258 and 60 parts M6aq. Comparative example C-4 was made with a thermal cure anti-soiling topcoat, available from TFL. The mixtures were applied by spraying on substrate 2 according to method A(b) (2 min drying at 80°C) for example 8 and according to method C(b) for comparative example C-4. Anti-soiling characteristics were evaluated using soiling test methods A and B. The results are given in table 11.

**Table 11: anti-soiling properties**

| Ex | Soil A Soiled | Soil A Cleaned | Soil B Soiled | Soil B Cleaned |
|---|---|---|---|---|
| 8 | 2.0 | 1.0 | 3.7 | 1.1 |
| C-4 | 7.4 | 1.5 | 8.9 | 4.5 |

### Examples 9 to 13 and comparative example C-5

In examples 9 to 13, 100% monomer mixtures having a composition as indicated in table 12 were coated on substrate 4, using coating method B. Comparative example C-5 was made with a thermal cure anti-soiling topcoat, available from TFL, applied onto substrate 4 according to application C(b). After drying and/or curing, the coated substrates were subjected to the Marker Stain Tests (test method D), using a blue Artline™ 70N High Performance Permanent marker. The test results are represented in table 13.

**Table 12: composition of treating mixtures (parts by weight)**

| Ex | FC-2 | SR 399 | Ebecryl 1608 | TPGDA | mTMI | Tinuvin 292 | Irgacure 500 |
|---|---|---|---|---|---|---|---|
| 9 | 1.4 | 14.0 | 0 | 14.0 | 0 | 0.28 | 0.84 |
| 10 | 1.4 | 13.3 | 0 | 13.3 | 1.4 | 0.28 | 0.84 |
| 11 | 1.4 | 11.2 | 2.8 | 14.0 | 0 | 0.28 | 0.84 |
| 12 | 1.4 | 11.2 | 0 | 16.8 | 0 | 0.28 | 0.84 |
| 13 | 1.4 | 8.4 | 0 | 19.6 | 0 | 0.28 | 0.84 |

**Table 13: Anti-staining properties using the Marker Stain test method (ΔE)**

| Ex | ΔE Soil D-1 | ΔE Soil D-2 | ΔE Soil D-3 |
|---|---|---|---|
| 9 | 2.0 | 8.0 | 1.0 |
| 10 | 2.0 | 8.0 | 1.0 |
| 11 | 2.0 | 8.0 | 1.0 |
| 12 | 2.0 | 8.0 | 1.0 |
| 13 | 2.0 | 8.0 | 1.0 |
| C-5 | 5.0 | 1.0 | 3.0 |

### Examples 14 and 15 and comparative example C-6

Examples 14 and 15 were made with monomer mixtures M7aq and M8aq. 60 parts of monomer dispersions M7aq and M8aq respectively were mixed with 0.87 parts FC-1aq. 0.9 parts Irgacure™ 500 were added as well as 0.5 parts Texipol™ 63-258. The components were mixed until a homogeneous liquid was obtained. Comparative example C-6 was made with a thermal cure anti-soiling topcoat, available from TFL. In examples 14 and 15 substrate 2 was coated and cured according to method A(b) (2 min drying at 80°C). In comparative example C-6 substrate 2 was coated and cured according to method C(b). The anti-soiling characteristics of coated substrate 2 were tested using soiling test methods A and B. The results are given in table 14.

**Table 14: anti-soiling characteristics of coated leather (ΔE)**

| Ex | ΔE Soil A Soiled | ΔE Soil A Cleaned | ΔE Soil B Soiled | ΔE Soil B Cleaned |
|---|---|---|---|---|
| 14 | 1.5 | 0.8 | 2.8 | 1.0 |
| 15 | 1.1 | 0.7 | 0.6 | 0.7 |
| C-6 | 5.7 | 3.1 | 10.4 | 5.6 |

### Examples 16 to 23 and Comparative example C-7

Examples 16 to 23 were made with monomer mixture M9 and different fluorinated monomers as given in table 15. 60 parts of monomer dispersion M9aq1 were mixed with an amount of aqueous fluorinated monomer dispersion to obtain 3% solids fluorinated monomer in the treatment mixture, 0.6 parts Irgacure™ 500 were added as well as 0.67 parts Texipol™ 63-258. The components were mixed until homogeneous liquids were obtained. Comparative example C-7 was made with a thermal cure anti-soiling topcoat, available from TFL. In examples 16 to 23, substrate 2 was coated and cured according to method A(b) (2 min drying at 80°C). In comparative example C-7 substrate 2 was coated and cured according to method C(b). The anti-soiling characteristics of coated substrate 2 were tested using repeated soiling test methods A and B. The results as given in table 15 represent the values of ΔE that were obtained after one soiling (indicated as 1^{st} Soil A and 1^{st} Soil B) and the values of ΔE obtained after the samples were soiled a second time (indicated as 2^{nd} Soil A and 2^{nd} Soil B).

**Table 15: anti-soiling characteristics of coated leather (ΔE)**

| Ex | FC used | ΔE 1^{st} Soil A | ΔE 1^{st} Soil B | ΔE 2^{nd} Soil A | ΔE 2^{nd} Soil B |
|---|---|---|---|---|---|
| 16 | FC-3 | 0.92 | 0.62 | 0.82 | 0.55 |
| 17 | FC-4 | 1.16 | 0.93 | 0.99 | 0.66 |
| 18 | FC-5 | 0.97 | 1.24 | 0.90 | 1.61 |
| 19 | FC-6 | 0.94 | 0.96 | 0.88 | 0.56 |
| 20 | FC-9 | 1.24 | 0.68 | 1.06 | 1.05 |
| 21 | FC-10 | 1.06 | 0.62 | 1.01 | 0.49 |
| 22 | FC-11 | 1.03 | 0.67 | 0.89 | 0.58 |
| 23 | FC-12 | 0.98 | 0.59 | 0.94 | 0.51 |
| C-7 | / | 4.18 | 5.98 | 6.50 | 8.58 |

### Examples 24 to 31 and Comparative example C-8

Examples 24 to 31 were made with aqueous dispersions containing 13% (on solids) fluorinated monomers, 1% Texipol 63-258 and 1% Irgacure™ 500. The aqueous dispersions were applied to substrate 2 according to method A(b) (2 min drying at 80°C). Comparative example C-8 was made with a thermal cure anti-soiling topcoat, available from TFL and applied to substrate 2 according to method C(b). The anti-soiling characteristics of coated substrate 2 were tested using soiling test methods A and B. The results as given in table 16 represent the values of ΔE that were obtained after one soiling (indicated as Soil A or Soil B soiled).

**Table 16**

| Ex | Fluorinated monomer | ΔE Soil A (soiled) | ΔE Soil B (soiled) |
|---|---|---|---|
| 24 | FC-3 | 0.47 | 0.23 |
| 25 | FC-5 | 0.79 | 2.25 |
| 26 | FC-6 | 0.97 | 0.65 |
| 27 | FC-8 | 2.25 | 3.46 |
| 28 | FC-9 | 0.38 | 0.50 |
| 29 | FC-10 | 1.36 | 0.70 |
| 30 | FC-11 | 2.25 | 2.01 |
| 31 | FC-12 | 0.58 | 0.38 |
| C8 | / | 4.96 | 9.50 |

### Examples 32 and 33 and Comparative example C-9

Example 32 was made with an aqueous dispersion containing 5.5% (on solids) fluorinated monomers FC-1aq, 1% Texipol 63-258 and 1% Irgacure™ 500. Example 33 was made with an aqueous dispersion containing 3.5% (on solids) FC-1aq, 2% SSQO, 1% Texipol 63-258 and 1% Irgacure™ 500. The aqueous dispersions were applied to substrate 2 according to method A(b) (2 min drying at 80°C). Comparative example C-9 was made with a thermal cure anti-soiling topcoat, available from TFL and applied to substrate 2 according to method C(b). The anti-soiling characteristics of coated substrate 2 were tested using soiling test methods A and B. The gloss of coated substrate 2 was measured using a gloss meter, type Super3gloss, available from BRAIVE instruments, Belgium. The gloss was measured at a 60° angle. The results as given in table 17 represent the values of ΔE and gloss that were obtained after one soiling (indicated as Soil A or Soil B soiled).

**Table 17**

| Ex | Fluorinated monomer | SSQO | ΔE Soil A (soiled) | ΔE Soil B (soiled) | 60° Gloss |
|---|---|---|---|---|---|
| 32 | 5.5% FC-1aq | / | 0.4 | 0.4 | 5.0 |
| 33 | 3.5% FC-1aq | 2% | 0.3 | 1.1 | 3.1 |
| C-9 | / | / | 4.0 | 6.0 | 1.8 |

### Examples 34 to 36, Comparative example C-10 and Reference example Ref-1

Examples 34 to 36 were made with monomer mixture M9 and different fluorinated monomers as given in table 18. 60 parts of monomer dispersion M9aq2 were mixed with an amount of aqueous fluorinated monomer dispersion to obtain 3% solids fluorinated monomer in the treatment mixture, 0.6 parts Irgacure™ 500 were added as well as 0.67 parts Texipol™ 63-258. The components were mixed until homogeneous liquids were obtained. Reference example Ref-1 was made with the same composition except that no fluorinated monomer was added. Comparative example C-10 was made with a thermal cure anti-soiling topcoat, available from TFL. In examples 34 to 36, and reference Ref-1 substrate 2 was coated and cured according to method A(b) (2 min drying at 80°C). In comparative example C-10 substrate 2 was coated and cured according to method C(b). The anti-soiling characteristics of coated substrate 2 were tested using soiling test methods A and B. The results as given in table 18 represent the values of ΔE that were obtained after soiling (indicated as Soil A-soiled and Soil B-soiled).

**Table 18: anti-soiling characteristics of coated leather (ΔE)**

| Ex | Fluorinated monomer | Non-fluorinated monomer mix | ΔE Soil A (soiled) | ΔE Soil B (soiled) |
|---|---|---|---|---|
| 34 | FC-5 | M9aq2 | 2.49 | 3.95 |
| 35 | FC-6 | M9aq2 | 0.87 | 1.83 |
| 36 | FC-12 | M9aq2 | 0.82 | 0.62 |
| Ref-1 | / | M9aq2 | 4.36 | 8.69 |
| C-10 | / | / | 4.18 | 5.98 |

## Claims

1. Leather article comprising a leather substrate having thereon at least one primer layer and a top layer, said top layer comprising a cross-linked composition obtainable by crosslinking a composition comprising one or more multi-functional monomers having two or more ethylenically unsaturated groups and optionally one or more mono-functional monomers having only one ethylenically unsaturated group and wherein at least one of the multi-functional monomers and/or one of the monofunctional monomers when present, has a fluorinated segment.

2. Leather article according to claim 1 wherein said primer layer comprises a resin based composition and wherein said resin is selected from the group consisting of (meth)acrylate resins, urethane resins, nitrocellulose resins and combinations thereof.

3. Leather article according to any of the previous claims wherein the fluorinated segment is selected from the group consisting of a partially fluorinated polyether segment, a perfluorinated polyether segment and a perfluorinated aliphatic segment.

4. Leather article according to any of the previous claims wherein said fluorinated monomer has at least two ethylenically unsaturated groups.

5. Leather article according to any of the previous claims wherein said the monomer having a fluorinated segment comprises a mixture of monomers obtainable by reacting a polyisocyanate, a fluorinated compound having an isocyanate reactive group and an organic compound having one or more ethylenically unsaturated groups and having an isocyanate reactive group.

6. Leather article according to any of the previous claims wherein said ethylenically unsaturated groups are selected from acrylates and methacrylate groups.

7. Leather article according to any of the previous claims wherein the weight % fluor relative to the total weight of the top layer is between 0.1% and 65%.

8. Leather article according to any of the previous claims wherein said crosslinking composition comprises one or more non-fluorinated monomers and one or more fluorinated monomers having a fluorinated segment, at least one of the monomers having two or more ethylenically unsaturated groups.

9. Leather article according to claim 8 wherein at least one of the non-fluorinated monomers has two or more ethylenically unsaturated groups.

10. Leather article according to claim 8 or 9 wherein at least one of the fluorinated monomers has two or more ethylenically unsaturated groups.

11. Leather article according to any of the previous claims wherein the thickness of the top layer is between 0.1 and 50 g/m².

12. Leather article according to any of the previous claims further comprising a silsesquioxane.

13. Method of making a leather article as claimed in claim 1 by applying a cross-linking composition to a leather substrate having a primer layer and causing said cross-linking composition to cross-link, wherein said cross-linking composition comprises one or more multi-functional monomers having two or more ethylenically unsaturated groups and optionally one or more mono-functional monomers having only one ethylenically unsaturated group and wherein at least one of the multi-functional monomers and/or one of the monofunctional monomers when present, has a fluorinated segment.

14. Method according to claim 13 wherein said cross-linking composition is cross-linked by exposing the applied cross-linking composition to actinic radiation or to e-beam radiation.

15. Method according to any of claims 13 to 14 wherein said ethylenically unsaturated groups are selected from acrylates and methacrylate groups.

## Patentansprüche

1. Lederartikel, umfassend ein Ledersubstrat mit mindestens einer Primerschicht und einer Deckschicht darauf, wobei die Deckschicht eine vernetzte Zusammensetzung umfasst, die durch Vernetzen einer Zusammensetzung erhältlich ist, die ein oder mehrere multifunktionelle Monomere mit zwei oder mehr ethylenisch ungesättigten Gruppen und gegebenenfalls ein oder mehrere monofunktionelle Monomere mit nur einer ethylenisch ungesättigten Gruppe umfasst, wobei mindestens eines der multifunktionellen Monomere und/oder eines der monofunktionellen Monomere, sofern vorhanden, ein fluoriertes Segment aufweist.

2. Lederartikel nach Anspruch 1, wobei die Primerschicht eine auf Harz basierende Zusammensetzung umfasst und das Harz aus der Gruppe bestehend aus (Meth)acrylatharzen, Urethanharzen, Nitrocelluloseharzen und Kombinationen davon ausgewählt ist.

3. Lederartikel nach einem der vorhergehenden Ansprüche, wobei das fluorierte Segment aus der Gruppe bestehend aus einem teilfluorierten Polyethersegment, einem perfluorierten Polyethersegment und einem perfluorierten aliphatischen Segment ausgewählt ist.

4. Lederartikel nach einem der vorhergehenden Ansprüche, wobei das fluorierte Monomer mindestens zwei ethylenisch ungesättigte Gruppen aufweist.

5. Lederartikel nach einem der vorhergehenden Ansprüche, bei dem das ein fluoriertes Segment aufweisende Monomer eine Mischung von Monomeren umfasst, die durch Umsetzung eines Polyisocyanats, einer fluorierten Verbindung mit einer isocyanatreaktiven Gruppe und einer organischen Verbindung mit einer oder mehreren ethylenisch ungesättigten Gruppen und einer isocyanatreaktiven Gruppe erhältlich ist.

6. Lederartikel nach einem der vorhergehenden Ansprüche, wobei die ethylenisch ungesättigten Gruppen aus Acrylat- und Methacrylatgruppen ausgewählt sind.

7. Lederartikel nach einem der vorhergehenden Ansprüche, wobei der prozentuale Gewichtsanteil von Fluor, bezogen auf das Gesamtgewicht der Deckschicht, zwischen 0,1% und 65% liegt.

8. Lederartikel nach einem der vorhergehenden Ansprüche, wobei die vernetzende Zusammensetzung ein oder mehrere nichtfluorierte Monomere und ein oder mehrere fluorierte Monomere mit einem fluorierten Segment umfasst, wobei mindestens eines der Monomere zwei oder mehr ethylenisch ungesättigte Gruppen aufweist.

9. Lederartikel nach Anspruch 8, wobei mindestens eines der nichtfluorierten Monomere zwei oder mehr ethylenisch ungesättigte Gruppen aufweist.

10. Lederartikel nach Anspruch 8 oder 9, wobei mindestens eines der fluorierten Monomere zwei oder mehr ethylenisch ungesättigte Gruppen aufweist.

11. Lederartikel nach einem der vorhergehenden Ansprüche, wobei die Deckschicht eine Dicke zwischen 0,1 und 50 g/m² aufweist.

12. Lederartikel nach einem der vorhergehenden Ansprüche, der ferner ein Silsesquioxan umfasst.

13. Verfahren zur Herstellung eines Lederartikels gemäß Anspruch 1 durch Aufbringen einer vernetzenden Zusammensetzung auf ein Ledersubstrat mit einer Primerschicht und Bewirken des Vernetzens der vernetzenden Zusammensetzung, wobei die vernetzende Zusammensetzung ein oder mehrere multifunktionelle Monomere mit zwei oder mehr ethylenisch ungesättigten Gruppen und gegebenenfalls ein oder mehrere monofunktionelle Monomere mit nur einer ethylenisch ungesättigten Gruppe umfasst, wobei mindestens eines der multifunktionellen Monomere und/oder eines der monofunktionellen Monomere, sofern vorhanden, ein fluoriertes Segment aufweist.

14. Verfahren nach Anspruch 13, bei dem man die vernetzende Zusammensetzung durch Einwirken von aktinischer Strahlung oder Elektronenstrahlung auf die aufgebrachte vernetzende Zusammensetzung vernetzt.

15. Verfahren nach einem der Ansprüche 13 bis 14, bei dem man die ethylenisch ungesättigten Gruppen aus Acrylat- und Methacrylatgruppen auswählt.

## Revendications

1. Article en cuir comprenant un substrat en cuir portant au moins une couche primaire et une couche supérieure, ladite couche supérieure comprenant une composition réticulée que l'on peut obtenir par réticulation d'une composition comprenant un ou plusieurs monomères multifonctionnels comportant deux groupes à insaturation éthylénique ou plus et éventuellement un ou plusieurs monomères monofonctionnels comportant un seul groupe à insaturation éthylénique et dans lequel au moins un des monomères multifonctionnels et/ou un des monomères monofonctionnels, quand ceux-ci sont présents, comporte un segment fluoré.

2. Article en cuir selon la revendication 1, dans lequel ladite couche primaire comprend une composition à base de résine et dans lequel ladite résine est sélectionnée dans le groupe constitué de résines (méth)acrylates, de résines uréthaniques, de résines de nitrocellulose et de combinaisons de celles-ci.

3. Article en cuir selon l'une quelconque des revendications précédentes, dans lequel le segment fluoré est sélectionné dans le groupe constitué d'un segment polyéther partiellement fluoré, d'un segment polyéther perfluoré et d'un segment aliphatique perfluoré.

4. Article en cuir selon l'une quelconque des revendications précédentes, dans lequel ledit monomère fluoré comporte au moins deux groupes à insaturation éthylénique.

5. Article en cuir selon l'une quelconque des revendications précédentes, dans lequel ledit monomère comportant un segment fluoré comprend un mélange de monomères que l'on peut obtenir en faisant réagir un polyisocyanate, un composé fluoré comportant un groupe réactif isocyanate et un composé organique comportant un ou plusieurs groupes à insaturation éthylénique et comportant un groupe réactif isocyanate.

6. Article en cuir selon l'une quelconque des revendications précédentes, dans lequel lesdits groupes à insaturation éthylénique sont sélectionnés parmi des groupes acrylates et méthacrylates.

7. Article en cuir selon l'une quelconque des revendications précédentes, dans lequel le pourcentage pondéral de fluor relativement au poids total de la couche supérieure est de 0,1 % à 65 %.

8. Article en cuir selon l'une quelconque des revendications précédentes, dans lequel ladite composition de réticulation comprend un ou plusieurs monomères non fluorés et un ou plusieurs monomères fluorés comportant un segment fluoré, au moins un des monomères comportant deux groupes à insaturation éthylénique ou plus.

9. Article en cuir selon la revendication 8, dans lequel au moins un des monomères non fluorés comporte deux groupes à insaturation éthylénique ou plus.

10. Article en cuir selon la revendication 8 ou 9, dans lequel au moins un des monomères fluorés comporte deux groupes à insaturation éthylénique ou plus.

11. Article en cuir selon l'une quelconque des revendications précédentes, dans lequel l'épaisseur de la couche supérieure est de 0,1 g/m² à 50 g/m².

12. Article en cuir selon l'une quelconque des revendications précédentes, comprenant en outre un silsesquioxane.

13. Procédé de fabrication d'un article en cuir selon la revendication 1, consistant à appliquer une composition de réticulation sur un substrat en cuir portant une couche primaire et à entraîner la réticulation de ladite composition de réticulation, ladite composition de réticulation comprenant un ou plusieurs monomères multifonctionnels comportant deux groupes à insaturation éthylénique ou plus et éventuellement un ou plusieurs monomères monofonctionnels comportant un seul groupe à insaturation éthylénique, et dans lequel au moins un des monomères multifonctionnels et/ou un des monomères monofonctionnels, quand ceux-ci sont présents, comporte un segment fluoré.

14. Procédé selon la revendication 13, dans lequel ladite composition de réticulation est réticulée par exposition de la composition de réticulation appliquée à un rayonnement actinique ou à un rayonnement sous forme de faisceau d'électrons.

15. Procédé selon l'une quelconque des revendications 13 à 14, dans lequel lesdits groupes à insaturation éthylénique sont sélectionnés parmi des groupes acrylates et méthacrylates.
